# EUROPEAN PATENT SPECIFICATION

(11) **EP 2 609 143 B1**
(45) Date of publication and mention of the grant of the patent: **26.12.2018**
(21) Application number: 11752051.0
(22) Date of filing: 24.08.2011
(51) Int. Cl.: C08J 9/00, C08J 9/24, C08K 7/00

(54) **CELLULAR FOAM ADDITIVE**
ZUSATZ FÜR ZELLSCHAUMSTOFF
ADDITIF DE MOUSSE CELLULAIRE

(30) Priority: 13.10.2010 US 392558 P; 24.08.2010 US 376607 P; 12.07.2011 US 201113181476
(43) Date of publication of application: 03.07.2013
(73) Proprietor: Ecopuro, LLC, Denver CO 80202 (US)
(72) Inventor: JOHNSON, William, L., Sr., Grove, OK 74344 (US)
(74) Representative: Leppard, Andrew John
(86) International application number: PCT/US2011/049022
(87) International publication number: WO 2012/027510

(56) References cited:
- WO-A1-2009/144675
- DE-A1- 2 102 247
- US-A- 5 162 397
- US-A1- 2008 161 437

## Description

### FIELD OF THE INVENTION

The invention relates to a foam having cellular consistency and to a method of producing such foam. More particularly, the method relates to the addition of kinetic mixing particles to a foam. The addition of kinetic mixing particles improves boundary layer mixing and promotes improved dispersion of blowing agents, reactive and nonreactive additives.

### BACKGROUND OF THE INVENTION

In the early 20th century, various types of specially manufactured solid foams came into use. The low density of these foams made them excellent for use as thermal insulators and flotation devices, and their lightness and compressibility made the foams ideal for use as packing materials and stuffing. In the last 40 years foam development has progressed from a simple material into complex, highly advanced, cellular structural materials that are lightweight and durable. These new foam materials are outperforming fiberglass, composites, sheet steel and plastics in a variety of diverse markets including automobiles, agricultural equipment, boats, bathroom showers and tubs, fencing, doors, window frames and decorative molding trim, to mention a few. Today the cellular foam industry continues to strive for product improvements including consistency of the cellular structure, dispersion of formula components, improved strength, and reduced costs.

In the field of fluid dynamics, the boundary layer of a flowing fluid has always been considered fixed and immovable. In the laminar region, the boundary layer creates a steady form of resistance to fluid flow. The reduction of drag is similar to comparing static friction to the kinetic friction of a moving body and applying it to a fluid flow. If the fluid is not moving, the inert structural particle, i.e., the kinetic mixing particle, acts like a filler in the nano and micron size range, thereby creating nucleating sites during the foaming process. When the micron nano sized particles are moving, the unique three-dimensional shape of the kinetic mixing particles promotes kinetic mixing of additives and fillers throughout polymer matrix thereby converting a stagnant boundary layer region into a dynamic mixing zone.

The highly specialized particles, i.e., the kinetic mixing particles, may be incorporated into solids such as plastics. In an extruder, the solid is melted. The melted plastic develops a boundary layer over the entire surface area of the screw and barrels in a high shear environment. The boundary layer kinetic mixing is activated whenever and wherever the fluid is moving. In the case where the material is a fluid, such as a polyurethane, the materials can be mixed using simple agitation, such as a turbine mixer or an advanced impinge jet mixing system. In both cases, movement of the particles is activated due to fluid movement. Initial kinetic mixing occurs as the components are being mixed using high shear. As the fluid moves, kinetic mixing is propagated.

DE 21 02 247 A1 discloses a process for the preparation of polyamide foam plastics. The method controls the structure of foamed polyamide in which one or more foam stabilizers are used together with a finely-divided porous substance of open cell structure in the liquid lactam-containing reaction mixture.

WO2009144675 discloses a method of preparing a rigid foam material is presented, the method comprising: providing a curable liquid matrix material; mixing the liquid matrix material with a plurality of microspheres; adding nanoparticles to the matrix material; and curing a mixture comprising the matrix material, the microspheres and the nanoparticles. The addition of nanoparticles to the matrix material may significantly reduce the viscosity of the mixture comprising the liquid matrix material and the microspheres.

US2008161437 discloses a novel foam composition for preparing polyisocyanurate foam. The composition comprises an isocyanate reactive compound, polyisocyanate, blowing agent and calcium carbonate filler component.

US5162397 discloses a foamable silicone composition comprises a polysiloxane having silicon-bonded hydrogen atoms, a polysiloxane having siloxane units including unsaturated groups, a polysiloxane having silicon-bonded hydroxyl groups, a noble metal catalyst and from 3 to 40 parts by weight per 100 parts by weight of the composition of entities of borosilicate or silicate glass or mixtures thereof. Preferred entities comprise hollow spherical particles or hollow entities which have an irregular configuration.

### SUMMARY OF THE INVENTION

Aspects of the present invention are set out in the claims.

Applicant's invention directly improves all four categories of consistency of the cellular structure, dispersion of formula components, improved strength, and reduced costs through the use of inert micro and nano sized structural particles.

The method of the invention provides a unique solution to the above mentioned problems. The addition of the kinetic mixing particles of the invention provides kinetic mixing of the boundary layer, which produces a homogenous dispersion with micro and nano mixing that allows for reduction of expensive additives that may be environmentally damaging while still maintaining benefits associated with the additives. The technology of the invention uses environmentally safe, chemically stable solid particles to continuously mix materials as long as the fluid is flowing.

The addition of kinetic mixing particles results in improvements in boundary layer mixing, i.e., the invention relates to the effects of structural mechanical fillers on fluid flow, wherein the particles have sizes ranging from nano to micron. In particular, the size ranges of the particles are preferably from approximately 500 nm to 1µ, and more preferably, from 1µ to 30µ. However, any sub ranges within the defined ranges are also contemplated as being effective. The invention uses the principles of boundary layer static film coupled with frictional forces associated with a particle being forced to rotate or tumble in the boundary layer due to fluid velocity differentials. As a result, kinetic mixing is promoted through the use of the kinetic mixing or structural particles.

As an example, consider that a hard sphere rolling on a soft material travels in a moving depression. The soft material is compressed in front of the rolling sphere and the soft material rebounds at the rear of the rolling sphere. If the material is perfectly elastic, then energy stored during compression is returned to the sphere by the rebound of the soft material at the rear of the rolling sphere. In practice, actual materials are not perfectly elastic. Therefore, energy dissipation occurs, which results in kinetic energy, i.e., rolling. By definition, a fluid is a material continuum that is unable to withstand a static shear stress. Unlike an elastic solid, which responds to a shear stress with a recoverable deformation, a fluid responds with irrecoverable flow. The irrecoverable flow may be used as a driving force for kinetic mechanical mixing in the boundary layer. By using the principle of rolling, kinetic friction and an increase of fluid sticking at the surface of the no-slip zone, adherents are produced. Fluid flow that is adjacent to the boundary layer produces an inertial force upon the adhered particles. Inertial force rotates the particles along the surface of mechanical process equipment regardless of mixing mechanics used, i.e., regardless of static, dynamic or kinetic mixing.

Geometric design or selection of structural particles is based on the fundamental principle of surface interaction with the sticky film in the boundary layer where the velocity is zero. Mechanical surface adherence is increased by increasing particle surface roughness. Particle penetration deep into the boundary layer produces kinetic mixing. Particle penetration is increased by increasing sharpness of particle edges or bladelike particle surfaces. A particle having a rough and/or sharp particle surface exhibits increased adhesion to the non-slip zone, which promotes better surface adhesion than a smooth particle having little to no surface characteristics. The ideal particle size will differ depending upon the fluid due to the viscosity of a particular fluid. Because viscosity differs depending on the fluid, process parameters such as temperature and pressure as well as mixing mechanics produced by shear forces and surface polishing on mechanical surfaces will also differ, which creates a variation in boundary layer thickness. A rough and/or sharp particle surface allows a particle to function as a rolling kinetic mixing blade in the boundary layer. Hardened particles having rough and/or sharp edges that roll along a fluid boundary layer will produce micro mixing by agitating the surface area of the boundary layer.

Solid particles used for kinetic mixing in a boundary layer, i.e., kinetic boundary layer mixing material or kinetic mixing material, preferably have following characteristics:
Particles should have a physical geometry characteristic that allows the particle to roll or tumble along a boundary layer surface.

Particles should have a surface roughness sufficient to interact with a zero velocity zone or a non-slip fluid surface to promote kinetic friction rather than static friction. The mixing efficiency of particles increases with surface roughness.

Particles should be sufficiently hard so that the fluid is deformed around a particle for promoting kinetic mixing through the tumbling or rolling effect of the particle.

Particles should be size proportional to the boundary layer of a fluid being used so that the particles roll or tumble due to kinetic rolling friction.

Particles should not be too small. If the particles are too small, the particles will be caught in the boundary layer and will lose an ability to tumble or roll which increases friction and promotes mechanical wear throughout the contact zone of the boundary layer.

Particles should not be too large. If the particles are too large, the particles will be swept into the bulk fluid flow and have a minimal, if any, effect on kinetic boundary layer mixing. The particles should have size and surface characteristics, such as roughness and/or sharp bladelike characteristics, to be able to reconnect in the boundary layer from the bulk fluid during the mixing process.

Particles can be solid or porous materials, manmade or naturally occurring minerals and or rocks.

### Physical geometry of particles:

Particle shapes can be spherical, triangular, diamond, or square, but semi-flat or flat particles are less desirable because they do not tumble well. Semi-flat or flat particles tumble less well because the cross-sectional surface area of a flat particle has little resistance to fluid friction applied to its small thickness. However, since agitation in the form of mixing is desired, awkward forms of tumbling are beneficial since the awkward tumbling creates dynamic random generated mixing zones at the boundary layer. Random mixing zones are analogous to mixing zones created by big mixing blades operating with little mixing blades. Some of the blades turn fast and some of the blades turn slow, but the result is that the blades are all mixing. In a more viscous fluid, which has less inelastic properties, kinetic mixing by particles will produce a chopping and grinding effect due to particle surface roughness and due to sharp edges of the particles.

Spherical particles having extremely smooth surfaces are not ideal for the following reasons. First, surface roughness increases friction between the particle and the fluid, which increases the ability of the particle to remain in contact with the sticky and/or the non-slip zone. In contrast, a smooth surface, such as may be found on a sphere, limits contact with the sticky layer due to poor surface adhesion. Second, surface roughness directly affects the ability of a particle to induce mixing through tumbling and/or rolling, whereas a smooth surface does not. Thirdly, spherical shapes with smooth surfaces tend to roll along the boundary layer, which can promote a lubricating effect. However, spherical particles having surface roughness help to promote dynamic mixing of the boundary layer as well as promote lubricating effects, especially with low viscosity fluids and gases.

### Advantages of adding kinetic mixing materials to polymers include:

- Cost savings achieved by the replacement of expensive polymers with inexpensive structural material.
- Cost savings achieved by increasing an ability to incorporate more organic material into polymers.
- Cost savings achieved by increasing productivity with high levels of organic and/or structural materials.
- Better dispersion of additives and/or fillers through increased mixing on large mechanical surfaces produced by boundary mixing.
- Better mixing of polymers by grinding and cutting effects of the particles rolling along the large surface area of process/mixing equipment as the velocity of the polymers through fluid flow will impact the surface during normal mixing operations.
- Reduction of coefficient of friction on mechanical surfaces caused by boundary layer effects of static friction, which are replaced by rolling kinetic friction of a hard particle in the boundary layer.
- Increased production by reduction of the coefficient of friction in the boundary layer where the coefficient of friction directly affects the production output.
- Surface quality improvement: introduction of kinetic mixing particles produces a polymer rich zone on a mechanical surface due to rotation of the particles in the boundary layer during mixing, i.e., when mixing dyes, injecting in molds, etc. The polymer rich zone results in excellent surface finish whether the polymer is filled or unfilled.
- The production of particle rotation and agitation of stagnant film of the boundary layer by kinetic mixing, which results in self-cleaning of the boundary layer to remove particulates and film.
- Enhanced heat transfer due to kinetic mixing in the boundary layer, which is considered to be a stagnant film, where the heat transfer is primarily conduction but the mixing of the stagnant film produces forced convection at the heat transfer surface.

The kinetic mixing material of the invention will help meet current and anticipated environmental regulatory requirements by reducing the use of certain toxic additives and replacing the toxic additives with an environmentally friendly, inert solid, i.e., with a kinetic mixing material that is both chemically and thermally stable.

### BRIEF DESCRIPTION OF THE DRAWINGS

FIG. 1 is an SEM image of unprocessed expanded perlite.
FIG. 2 is an SEM image of processed perlite at 500x magnification.
FIG. 3 is an SEM image of processed perlite at 2500x magnification.
FIG. 4 is an SEM image of volcanic ash wherein each tick mark equals 100 microns.
FIG. 5 is an SEM image of volcanic ash wherein each tick mark equals 50 microns.
FIG. 6A is an SEM image of natural zeolite-templated carbon produced at 700C.
FIG. 6B is an SEM image of natural zeolite-templated carbon produced at 800C.
FIG. 6C is an SEM image of natural zeolite-templated carbon produced at 900C.
FIG. 6D is an SEM image of natural zeolite-templated carbon produced at 1,000C.
FIG. 7 is an SEM image of nano porous alumina membrane at 30000x magnification.
FIG. 8 is an SEM image of pseudoboehmite phase Al₂O₃xH₂O grown over aluminum alloy AA2024-T3 at 120,000 magnification.
FIG. 9 is an SEM image of unprocessed hollow ash spheres at 1000x magnification.
FIG. 10 is an SEM image of processed hollow ash spheres at 2500x magnification.
FIG. 11 is an SEM image of 3M® glass bubbles.
FIGS. 12A and 12B are SEM images of fly ash particles at 5,000x (FIG. 12A) and 10,000x (FIG. 12B) magnification.
FIG. 13 is an SEM image of recycled glass at 500x magnification.
FIG. 14 is an SEM image of recycled glass at 1,000x magnification.
FIG. 15 is an SEM image of processed red volcanic rock at 750x magnification.
FIG. 16A-16D are SEM images of sand particles.
FIG. 17A is an SEM image of zeolite Y, A and silicate 1 synthesized for 1 hour.
FIG. 17B is an SEM image of zeolite Y, A and silicate 1 synthesized for 1 hour.
FIG. 17C is an SEM image of zeolite Y, A and silicate 1 synthesized for 6 hours.
FIG. 17D is an SEM image of zeolite Y, A and silicate 1 synthesized for 6 hours.
FIG. 17E is an SEM image of zeolite Y, A and silicate 1 synthesized for 12 hours.
FIG. 17F is an SEM image of zeolite Y, A and silicate 1 synthesized for 12 hours.
FIG. 18 is an SEM image of phosphocalcic hydroxyapatite.
FIG. 19A is an SEM image of Al MFI agglomerates.
FIG. 19B is an SEM image of Al MFI agglomerates.
FIG. 20A is an SEM image of microcrystalline zeolite Y at 20kx magnification.
FIG. 20B is an SEM image of microcrystalline zeolite Y at 100kx magnification.
FIG. 21 is an SEM image of ZnO, 50∼150 nm.
FIG. 22A is an SEM image of solid residues of semi-spherical clustering material.
FIG. 22B is an SEM image of zeolite-P synthesized at 100°C.
FIG. 23A is an SEM image of nanostructured CoOOH hollow spheres.
FIG. 23B is an SEM image of CuO.
FIG. 23C is an SEM image of CuO.

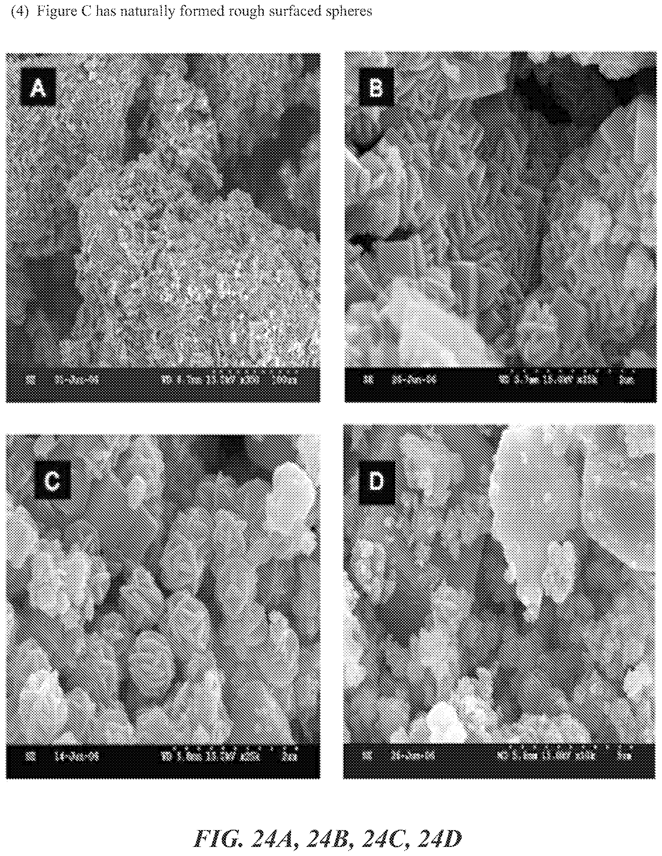

FIG. 24A is an SEM image of fused ash at 1.5N at 100 °C.
FIG. 24B is an SEM image of fused ash at 1.5N at 100 °C 6 hours showing unnamed zeolite.
FIG. 24C is an SEM image of fused ash at 1.5N at 100 °C 24 hours showing cubic zeolite.
FIG. 24D is an SEM image of fused ash at 1.5N at 100 °C 72 hours showing unnamed zeolite and Gibbsite large crystal.
FIG. 25A is an SEM image of 2.5 um uniform plain Al₂O₃ nanospheres.
FIG. 25B is an SEM image of 635 nm uniform plain Al₂O₃ nanospheres.
FIG. 26 is a computer-generated model showing hair-like fibers of CoOOH.
FIG. 27 shows two samples of rigid PVC with the same pigment loading in both samples wherein one sample includes kinetic mixing particles.
FIG. 28 shows two samples of polycarbonate with the same pigment loading in both samples wherein one sample includes kinetic boundary layer mixing particles.
FIG. 29 shows a rigid PVC with ABS spots.
FIG. 30 shows PVC and ABS mixed together.
FIG. 31 shows a test sample wherein green reacted epoxy with and without kinetic mixing particles were mixed with yellow reacted epoxy with and without kinetic mixing particles, respectively. The mixed sample with the kinetic mixing particle achieved superior mixing as evidence by the larger blue area.
FIGS. 32A -32T show a base polystyrene or polypropylene foam with direct gas injection, wherein the weight % of additive ranges from 0.35 wt % to 4.2 wt % , wherein the cells size ranges from 42 micron to 217 microns.
FIG. 33 shows a 10x magnification of polypropylene foam, where an increase in cells formed are visible in the foam having the kinetic mixing particles of the invention added thereto.
FIG. 34 shows a 60x magnification of polypropylene foam, where an increase in cells formed is visible in the foam having the kinetic mixing particles of the invention added thereto.

### DETAILED DESCRIPTION OF THE PREFERRED EMBODIMENTS

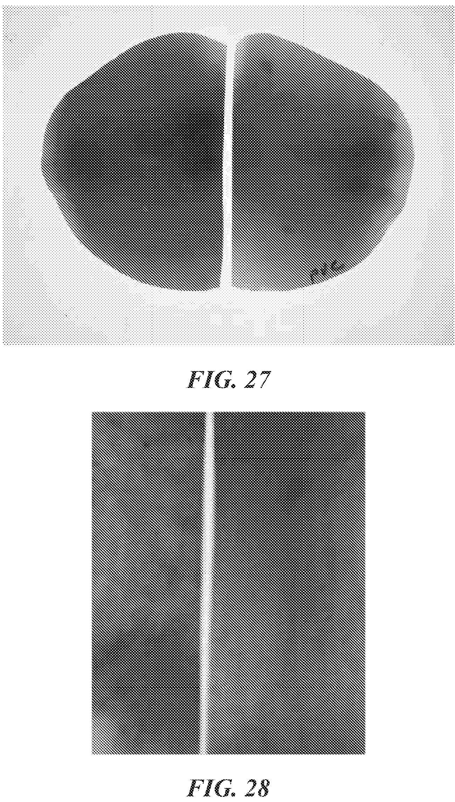

The introduction of kinetic mixing particles results in excellent dispersion capabilities, as illustrated by FIGS. 27 and 28 in viscosity materials such as thermoplastics in a high shear mixing environment.

Figure 27 shows a rigid PVC having the same pigment loading in both samples. It can clearly be seen that left sample having the kinetic boundary layer mixing particles therein exhibits dispersion better.

Figure 28 shows polycarbonate with the same pigment loading in both samples. It can clearly be seen that the sample on the right, having the kinetic boundary layer mixing particles, exhibits better dispersion.

Figures 27 and 28 clearly illustrate the benefits of kinetic boundary layer mixing particles in relationship to dispersion. The improved dispersion properties allows a base material to have fewer additives because the presence of kinetic mixing particles disburses additives better, thereby producing the same beneficial properties of an additive.

### Mixing and blending of dissimilar materials

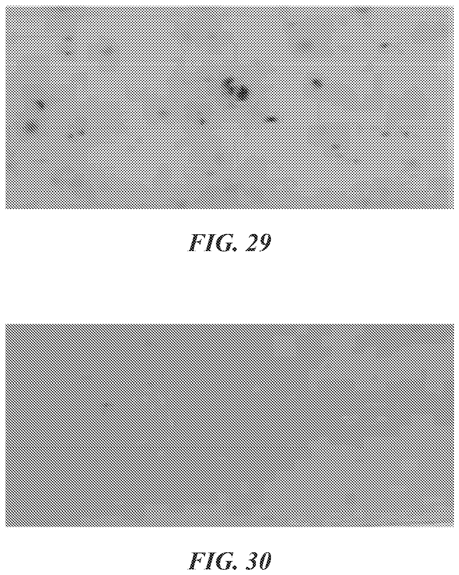

Figure 29 shows two images. Image 1 shows rigid PVC with ABS spots. These two materials, even under high shear conditions chemically do not want to mix or blend together.

Image 2 of Figure 30 shows the effect the adding kinetic boundary layer mixing particles on dissimilar materials that are difficult to mix. In an extruder, the PVC and ABS are mixed together, which resulted in the ABS acting like a black pigment.

Typically, additives in polymers are used to promote durability. However, in the case of fire retardants, fillers, de-foamers, surface tension modifiers and biocides etc., fillers often have a negative effect on the polymer, which produces fatigue throughout the cross-linked polymer system. The addition of kinetic mixing particles does more than improve mixing. The addition of kinetic mixing particles mechanically reduces the size of additives, which produces better interaction in the polymer matrix. Therefore, by reducing the size of additives and improving dispersion, the amount of additives can be reduced. This homogenous mixing characteristic increases crosslinking strength of the polymer by reducing the amount of additives needed to produce the desired result.

In a reactive two-component foam, the addition of kinetic mixing particles will help mix the liquid-to-liquid interface, which promotes better cross linking throughout the polymer. The additive of kinetic mixing particles will additionally improve adhesive strength and impart better flow properties.

As can be seen by reference to Fig. 38, the top sample, i.e., the sample with boundary breaker kinetic mixing particles is the more thoroughly mixed of the two samples. In other words, the top sample mixed the green and yellow reacted epoxy more thoroughly, resulting a greater amount of blue mixed epoxy.

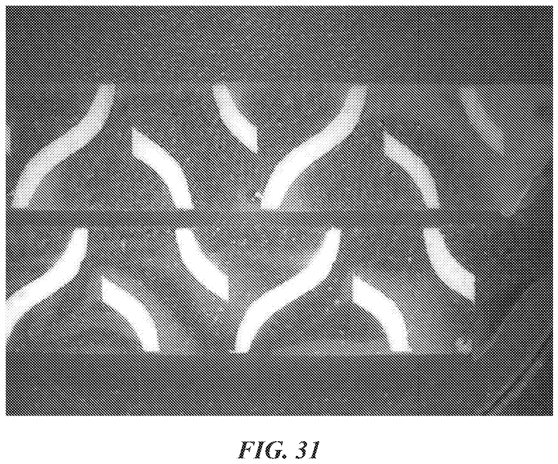

A static mixing test was conducted for dual component reactive materials, the results of which can be seen in Figure 31:
Material: Loctite two component 60 min. epoxy, 2 pigments, i.e., one yellow one green was used.
Equipment: Standard 50 mL dual caulking gun with 1/4 inch diameter 6 inch long disposable static mixer tip was used.

### Experiment set up:

100 ml of epoxy was reacted mixed and a small amount of yellow pigment was mixed in;
100 ml of epoxy was reacted mixed and a small amount of green pigment was mixed in;
The two 100 ml reacted epoxies with pigment within was then split in half. 50 ml of yellow reacted epoxy was put in one half of a single dual component cartridge in a static mixer. In the other half of the static mixer, 50 ml of green reacted epoxy was located in the single dual component cartridge.

The 50 ml yellow reacted epoxy had 1% by mass kinetic mixing particles hand mixed therein. The yellow reacted epoxy was put in one half of the static mixer cartridge. 50 ml green reacted epoxy had 1% by mass kinetic mixing particles hand mixed therein. The 50 ml green reacted epoxy was then placed in the other side of the dual component cartridge. The mixing process was conducted for approximately 5 minutes before the material was ejected out of the static mixer at the same low rate. The static mixing tubes were then allowed to be fully cured. The tubes were then cut in half using a water jet cutter. As can be seen by reference to FIG. 31, the top sample, i.e., the sample with kinetic mixing particles, is the more thoroughly mixed of the two samples. In other words, the top sample mixed the green and yellow reacted epoxy more thoroughly, resulting a greater amount of blue mixed epoxy.

### Application in Foam Technologies

When the highly specialized structural material, i.e., the kinetic mixing particles, is incorporated with a foaming technology, the unique characteristics of kinetic mixing do not stop when a mixing step is complete. The kinetic mixing particles continue to remain active as fluids move during the expansion process. The post mixing step particle activity promotes better dispersion of blowing agents as well as increased mobility through better dispersion of reactive and nonreactive additives
throughout the polymer during expansion of the foam. The better dispersion and increased mobility result in improved cellular consistency. The unique characteristic shape of three-dimensional, pointed, blade-like structures of the kinetic mixing particles produces excellent nucleation sites, thereby increasing cellular wall consistencies and strength.

It is desirable to reduce cell sizes of a foam from a 700-1000 micron sized cellular structure to 10 microns and lower. This breakthrough would allow the industry to make lighter, stronger foams than have ever been commercially available.

In a gas injected foam process using gases such as (N₂, CO₂, Ar, etc.), the most difficult part of the process is to dissolve the gases into the molten plastic or reactive material. Different gases have different solubility constants with different polymers.

### Solubility Constants

Variation of solubility constants results in inconsistencies in gas loading of various materials. Structural and thermal variations are caused by the inconsistent cellular structures where the foam has produced both large and small cell sizes. Attempts to overcome these difficulties include increasing extruder length or using multiple extruders to increase dispersion time for mechanical mixing. The addition of kinetic mixing particles incorporates nano and micron size three-dimensional hard structural particles. Kinetic mixing particles produce micro and nano size mechanical openings in the plastic during the mixing process. The openings allow gas dispersion into the polymer, thereby greatly reducing mixing time and the effects of gas solubility. The three-dimensional, kinetic mixing particles can be tailored to have a variety of sizes and shapes where the structural features, such as blade length, cavity depth, particle void size, protruding member size, spine-like structure length, etc., can produce cells in foam of a desired size.

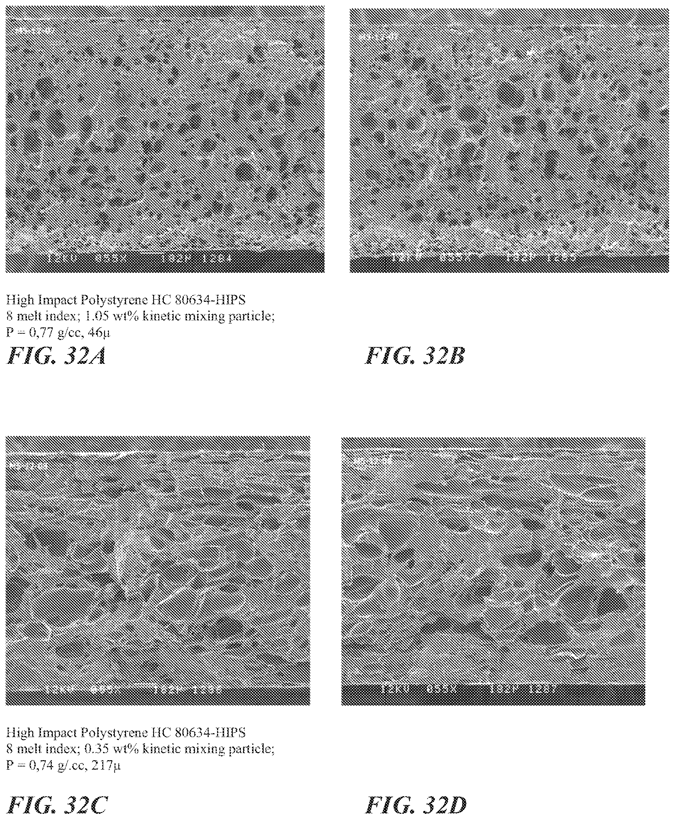

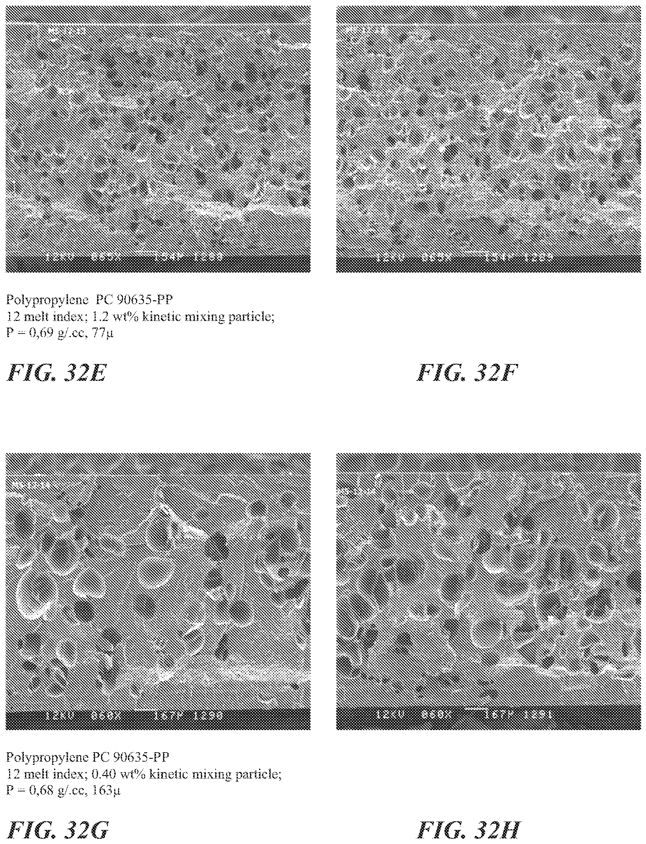

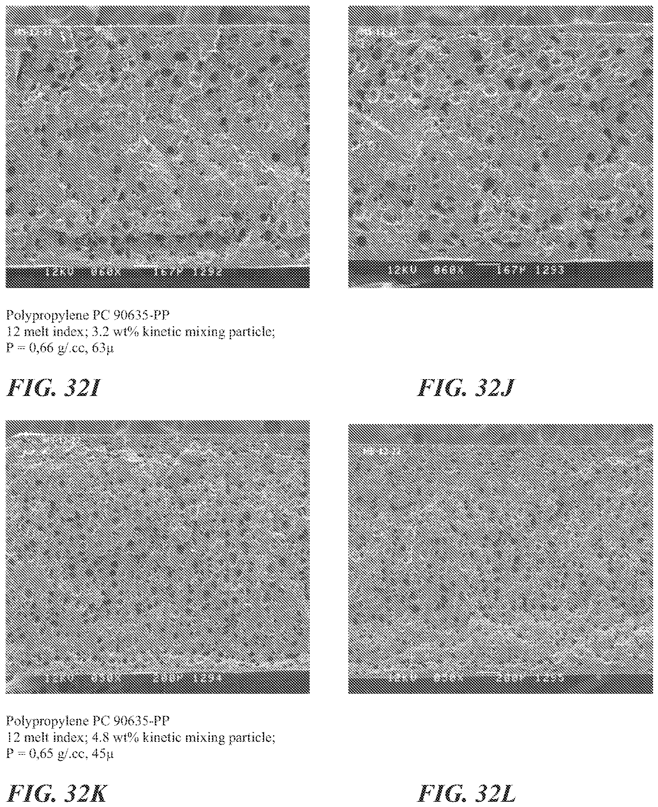

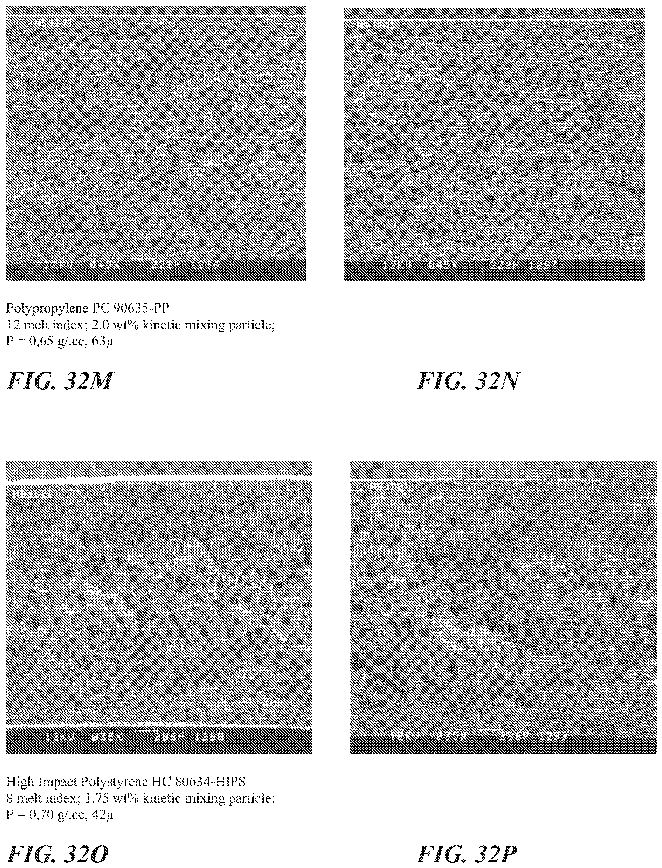

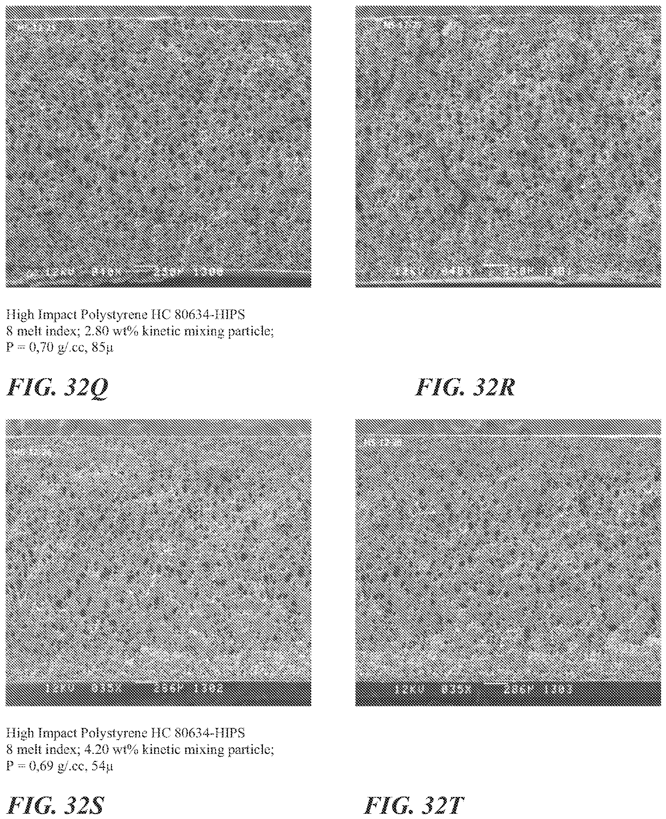

For example, a study was conducted wherein type I kinetic mixing particles were used and critical CO₂ gas was added into polypropylene with various concentrations of type I kinetic mixing particles. The results may be seen in Figures 32A-32T. The type I kinetic mixing particles were produced from expanded perlite and had an average particle size of 30µ with a formula weight concentrations listed in Table 1, below, not including the CO₂ gas. The addition of the type I kinetic mixing particles
produced a consistent small cellular structure of 45 µ with 4.8% by formula with and larger cellular structures of 163 µ with 0.40% by formula weight. The addition of the type I kinetic mixing particles into polystyrene produced a consistent cellular small structure of 42 µ with 1.75% by formula weight and larger cellular structures of 217µ with 0.35% by formula weight. With both polypropylene and polystyrene, the low-energy region that was produced when the kinetic mixing particles rotated was the same. However, the ability for the bubbles to conglomerate and produce larger cells is reduced when more kinetic particles are present. The polystyrene showed cellular structure can be decreased if too much of the kinetic boundary layer mixing particles were added in. The shift was from 42 µ at 1.75% by formula weight to 54 µ 4.2% by formula weight. Therefore, the higher the production rate of micron sized cellular structures being formed through the rotation of the kinetic mixing particles in a foam matrix, the greater the reduction of the potential of cellular conglomeration.

| Figure # | Resin | % Kinetic Mixing Particles in pellets | % pellets used in product feed | % Kinetic Mixing Particles in product shown in Figure | Cell Size Microns |
|---|---|---|---|---|---|
| 32K+L | PP | 40.00% | 12.00% | 4.80% | 45 |
| 32I+J | PP | 40.00% | 8.00% | 3.20% | 63 |
| 32M+N | PP | 40.00% | 5.00% | 2.00% | 63 |
| 32E+F | PP | 40.00% | 3.00% | 1.20% | 77 |
| 32G+H | PP | 40.00% | 1.00% | 0.40% | 163 |
| | | | | | |
| 32O+P | PS | 35.00% | 5.00% | 1.75% | 42 |
| 32A+B | PS | 35.00% | 3.00% | 1.05% | 46 |
| 32S+T | PS | 35.00% | 12.00% | 4.20% | 54 |
| 32C+D | PS | 35.00% | 1.00% | 0.35% | 217 |

The relationship between the particles and the resulting cell size is a function of surface characteristics of the kinetic particle being used.

For example, using the previously mentioned gas injected testing to illustrate particle size characteristics in relationship to cell formation, when an expanded perlite particle with the appropriate kinetic boundary layer mixing surface characteristics rolls and tumbles in kinetic motion, the perlite particle will produce low surface energy regions in the polymer that are proportional in size to a void cavity of the particle where the vertex of the void forms a very small angle. In one embodiment, i.e., where the void is defined by a hyperbolic surface, the vertex becomes infinite, in the same manner as the vertices of a non-conformal hyperbolic triangle. Expanded perlite having the characteristics of a type I mixing particle looks like the fletching on the back in of an arrow, i.e., the particle possesses three-dimensional bladelike characteristics, which allows bubble formation in between blades. The bubble will stay adhered to the bladelike structure until resistance forces applied by the fluid overcomes adhesive forces of the expanding and protruding bubble forming on the kinetic boundary layer mixing particle. The example above discussed an average mean particle size of 30 µ. Therefore, the particle radius in this example is 15µ. A bubble will release from a type I kinetic mixing particle at approximately three times the radius. The 3: 1 relationship changes depending on the types of kinetic mixing particles because the geometric contact between surfaces directly affects the adhesive forces of the bubble. Therefore, different geometric configurations change the surface to fluid removal energy to produce bigger or smaller cell sizes. The dynamics of the mixing and the selection of polymers and additives will have a significant effect on fluid force applied to the kinetic mixing particles to overcome the adhesive force of the bubble on a surface of the kinetic mixing particle, which can vary from application to application. A general rule of thumb is that the desired bubble size, i.e., foam void size, is expected to be from 0.025 to 8 times larger than the particle size diameter and/or of a protruding arm of a particle. For particle type 1, we expect the void size to be 1 - 8 times larger than the particle size diameter and/or of a protruding arm of a particle.

The addition of Applicant's kinetic mixing particles improves four areas of current foam technology: 1. Consistency of the Cellular Structure; 2. Dispersion of Formula Components; 3. Improved Strength; 4. Reduced Costs. These four areas of impact will be discussed below.

### Consistency of Cellular Structure

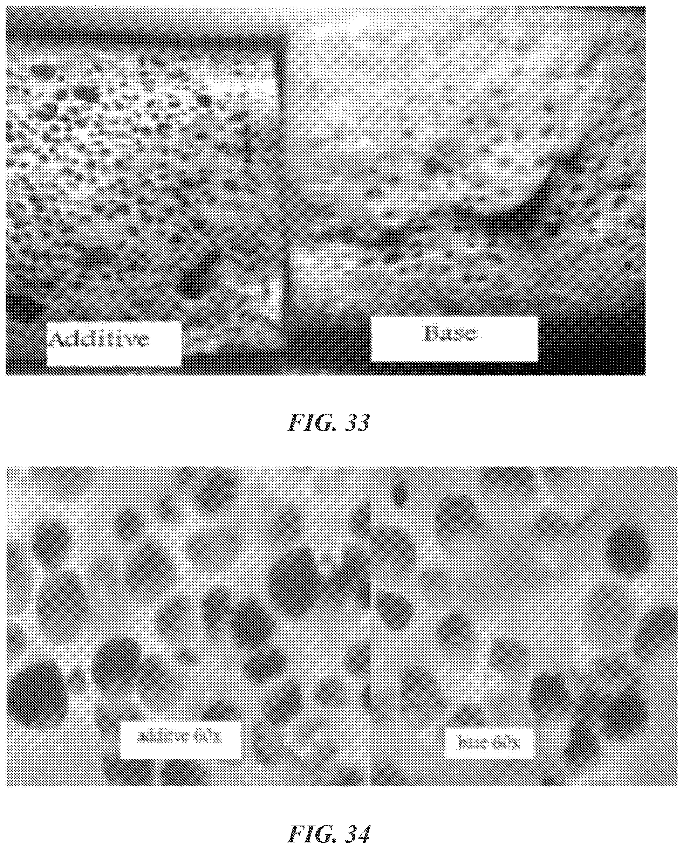

As the kinetic mixing particles move with the fluid during foam expansion, the edges produce excellent nucleation sites that cause the fluid to expand in such a way as to increase the consistency of the cellular structure. This can be seen in Figures 33 and 34. Figure 33 shows a 10x magnification wherein more cells can be seen in a polypropylene foam prepared with a kinetic mixing material additive type I than in the foam prepared without the additive. Similarly, Figure 34 show more cells in the interior of a polypropylene foam prepared with a kinetic mixing material additive type I than in the foam prepared without the additive.

### Dispersion of Formula Components

The boundary layer kinetic mixing particle type I made from expanded perlite resulted in better dispersion of all formula components, including blowing agents, throughout the polymer without changing chemical properties of the formula. Even during post-extruder expansion, the particles continue to influence the foam through mixing, thereby creating better dispersion of formula components throughout the polymer.

### Improved Strength

An Izod impact strength test was conducted on polypropylene foam at standard at ½" Izod profiles:
Polypropylene with 1%* Blowing Agent = 7.14 g
Polypropylene with 1%* Blowing Agent + 1%* Additive = 8.11 g
*by formula weight

The improved dispersion of formula components combined with the improved cellular makeup of the foam structure, produced by the introduction of the type I kinetic mixing particles, resulted in a 13.5% increase in impact strength.

### Reduced Cost

Weight reduction analysis on polypropylene foam, standard ½" Izod profiles
Polypropylene with 1%* Blowing Agent =21.5 g
Polypropylene with 1%* Blowing Agent + 1%* Additive = 13.5 g
*by formula weight

The improved dispersion of formula components combined with the improved cellular makeup of the foam structure, produced by the introduction of the kinetic mixing particles, resulted in a 25.0% reduction in the weight of the same geometrically shaped part.

The benefits of application of kinetic mixing particles are not limited to application in foam plastics such as polypropylene, polyethylene, polystyrene, PVC, ABS, etc.; nor are the benefits limited to reactive foams such as single component urethanes, plural component urethanes, epoxies, ureas, etc. The addition of kinetic mixing particles will produce similar results in any structural foam material that uses endothermic blowing agents, an exothermic blowing agents, nitrogen or CO₂ gas foam injection systems.

**Table 1**

| | | | **OPERATING PARAMETERS** | | | |
|---|---|---|---|---|---|---|
| **COMPANY** | Ferris | | | | | |
| **RESIN** | PP, PS | | | | | |
| **DATE** | | | | | | |
| **SCREW TYPE** | General-purpose | | | | | |
| **MACHINE # Huskey HY- Energy** | 150 ton engel | | **PP** | **Base** + | **PS** | **Base** + |
| **PART NAME** | Blowing Agent | | **Base** | **Boundary Breaker** | **Base** | **Boundary Breaker** |
| **NOZZLE** | ⁰F | | 400 | 400 | 425 | 425 |
| **ZONE 1 TEMPERATURE** | ⁰F | | 400 | 400 | 420 | 420 |
| **ZONE 2 TEMPERATURE** | ⁰F | | 380 | 380 | 415 | 415 |
| **ZONE 3 TEMPERATURE** | ⁰F | | 380 | 380 | 415 | 415 |
| **ZONE 4 TEMPERATURE** | ⁰F | | 370 | 370 | 410 | 410 |
| **ZONE 6 TEMPERATURE** | ⁰F | | | | | |
| | | | | | | |
| **MELT TEMPERATURE** | | | 400 | 400 | 420 | 420 |
| | | | | | | |
| hot runner | | | | | | |
| | | | | | | |
| Shot size | | | 2.5 | 2.5 | 2.5 | 2.5 |
| Injection Speed | | | | | | |
| Profile | mm/sec | | 50 | 50 | 50 | 50 |
| '1 | mm/sec | | | | | |
| '2 | mm/sec | | | | | |
| '3 | mm/sec | | | | | |
| '4 | mm/sec | | | | | |
| '5 | mm/sec | | | | | |
| I⁰ Injection Pressure | PSI/BAR | | 0.2 | 0.25 | 0.25 | 0.4 |
| Fill Time | %/Sec | | 2 | 2 | 2 | 2 |
| | | | | | | |
| **BACK PRESSURE** | %/BAR | | 75 | 75 | 75 | 75 |
| **SCREW SPEED** | % | | 50 | 50 | 40 | 40 |
| Cushion | mm | | 0.2 | 0.2 | 0.2 | 0.2 |
| Pack Time | Sec. | | 4 | 4 | 4 | 4 |
| Pack Pressure | PSI/BAR | | 0 | 0 | 0 | 0 |
| Hold Time | Sec. | | 0 | 0 | 0 | 0 |
| Hold Pressure | PSI/BAR | | 0 | 0 | 0 | 0 |
| **Recovery Time** | Sec. | | 15 | 15 | 18 | 18 |
| **Cure Time** | %/Sec | | 20 | 20 | 45 | 45 |
| Decompresion | mm | | 0.1 | 0.1 | 0.1 | 0.1 |
| **Cycle Time** | Sec. | | 30 | 30 | 55 | 55 |
| | | | | | | |
| | | | | | | |
| | | | | | | |
| Mold Temp. Front | ⁰F | | 80 | 80 | 80 | 80 |
| Mold Temp. Back | ⁰F | | 80 | 80 | 80 | 80 |

### Chemical blowing agents

The particles of the invention provide a mechanical assistance to commercially used blowing agents in three ways. The first is increased dispersion of the blowing agents produced by nano and micro mechanical mixing. The second is the nano and micron size perforations that occur during mixing that allow dispersion of chemical blowing agents into the polymer. The third is nano and micro mechanical kinetic blending process that lowers the surface tension in the mixing zone giving mechanical blowing agents the ability to nucleate more freely. These kinetic mixing particles can also be commercially incorporated into a blowing agent formulation through a coating and/or doping process to produce the same results. The base particle can be used to produce better blowing agents.

### Nucleation sites

There have been a variety of materials that have been used to produce better nucleation and more unified cell sizes. The most common commercially used material is talc along with some more exotic materials such as nano clay and carbon nano tubes. There has been a lot discussion and debate over of the nucleation particle size to foam cell size relationship.

The technology of the invention focuses on a fundamental principle of geometrical shapes to increase nucleation sites by promoting low surface energy inside a polymer. Lowered surface energy of a fluid surrounding a particle is produced by a geometrical shape having a very sharp vertex. Where the void is defined by a hyperbolic surface, the vertex becomes infinite in the same manner as the vertices of a non-conformal hyperbolic triangle. These geometrical shapes include accessible internal structures, voids or pockets whose geometric shapes produce corners, diamonds, and triangles.

Polymers are chain-like materials that naturally bend over surfaces and around particles in a manner similar to water flowing down a river. The more abrupt the shape of the particle, the greater turbulence that is produced. For example, consider rocks in a river, where smooth rocks create little to no turbulence while rocks that have abrupt edges and cavities produce lots of turbulence. The turbulence creates an area or region of low surface energy. Low surface energy areas allow for nucleation sites to occur.
Nucleation sites are the beginning of bubble formation that turns into a chain reaction of cell formation throughout the polymer.

Discussion of the geometric shapes of commonly used nucleation materials and new materials that are being developed follows.

Talc: flat plate-like shape, held together by weak Vander Wal forces which allows material to cleave during high shear. Talc can be processed into small particle sizes and may or may not have sharp or jagged edges depending on processing conditions.

Nano Clay: irregular shape, most likely spherical or cylindrical having an aspect ratio of approximately one. Nano clay is a hard organic and can be processed in nano size shapes.

Carbon nanotubes: cylindrical shaped or fiber-like. Carbon nanotubes are strong and are molecularly produced.

All of the above mentioned materials have attributes that produce low energy regions in a flowing fluid thereby stimulating adjacent nucleation sites based on size and geometry. For example, nano-sized particles promote low energy regions because long chain polymers have difficulty bending around a small radius. Therefore nano-sized particles produce small regions around particles for nucleation sites. A difficulty with nano materials is related to difficulties associated with dispersing the small particles uniformly throughout the polymer. Uniform dispersion is crucial to producing low surface energy regions based on particle radius in relationship of polymer bending. If the nano particles stay in conglomerated regions, the conglomerations may not produce low surface energy regions suitable for nucleation sites. Additionally, conglomerations make it difficult to calculate predictable nucleation based on nano particle count.

Talc has unique physical properties. Talc is not a rigid solid. Talc is held together by weak Vander Wal forces and is used in many cases as a lubricant. The natural shape of talc is thin small plate-like structures that undergo transformation of physical shape when under high pressure and shear produced by an extruder. Talc can be used to produce low energy sites by edge effects coupled with lubricating properties throughout the polymer. Talc is not a structural material. Therefore, talc changes size and shape within a extrusion process with different polymers because of the mechanical load imparted upon talc particles, making it difficult to accurately predict nucleation outcome, unlike talc. Applicant's kinetic mixing particles are ideal for nucleation sites because surface characteristics are predictable and repeatable based on their dispersability and structural integrity throughout a polymer, regardless of operating parameters inside the extruder.

Applicant's kinetic mixing particles are rigid structural particles with diverse surface characteristics that produce repeatable low surface energy interaction regardless of polymer or shear effects that are applied. Kinetic mixing particles are self-dispersing, which overcomes the complication of using nano materials as nucleation sites.

### Method of Application

The additive, i.e., the kinetic mixing particles, can be incorporated into a plastic or foam formula in different ways, including:
1. Directly into plastic pellets from a manufacturer or a compounding company at total formula weight percent of 0.20% to 70.0%
2. Compounded as an additive with a blowing agent from the manufacturer of a blowing agent in powder or granular form.
3. Fed into a plastic or foam mixture as a raw powder or as a specialized, compounded plastic pellet for feeding directly into the extruder using a hopper system to control percent loading.
4. Incorporated as a dry powder directly into fluids prior to the fluids being mixed or during the mixing process.

An example formulation of a blowing agent and a description of the equipment used to process may be found in Table 1.

### Particle type I

Particle type I embeds deep into the boundary layer to produce excellent kinetic mixing of foam constituent fluids in both the boundary layer and in the mixing zone. Type I particles increase dispersion of chemical and mineral additives. Type I particles increase fluid flow. The surface area of Type I particles is large compared to the mass of Type I particles. Therefore Type I particles stay in suspension well. In one example, a type (I) kinetic mixing particle is made from expanded perlite with a Mohs scale hardness of 5.5 (equivalent to a high-quality steel knife blade). For effectiveness, particles of all types preferably have a hardness of 2.5 or higher on the Mohs scale.

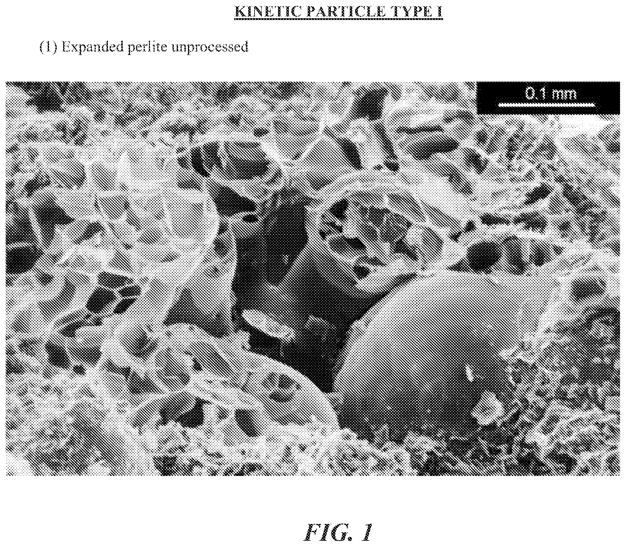

Referring to Figure 1, shown is expanded perlite that is unprocessed. Perlite is a mineable ore with no known environmental concerns and is readily available on most continents and is only surpassed in abundance by sand. Expanded perlite is produced through thermal expansion process which can be tailored to produce a variety of wall thicknesses of the bubbles. Expanded perlite clearly shows thin wall cellular structure and how it will deform under pressure. In one embodiment, perlite may be used in a raw unprocessed form, which is the most economic form of the material. Perlite has an ability to self-shape, i.e., to be crushed into smaller particles, under pressure into boundary layer kinetic mixing particles.

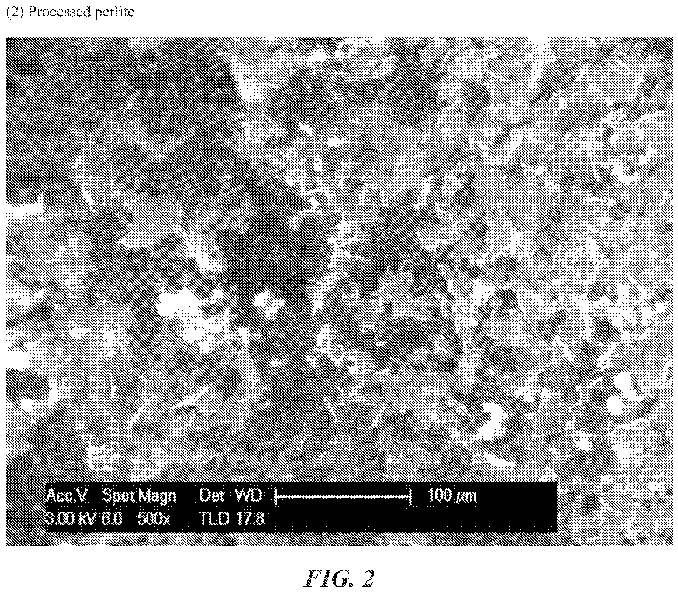

FIG. 2 is an image that demonstrates that the expanded perlite particles do not conglomerate and will flow easily among other process particles. Therefore, expanded perlite particles will easily disperse with minimal mixing equipment.

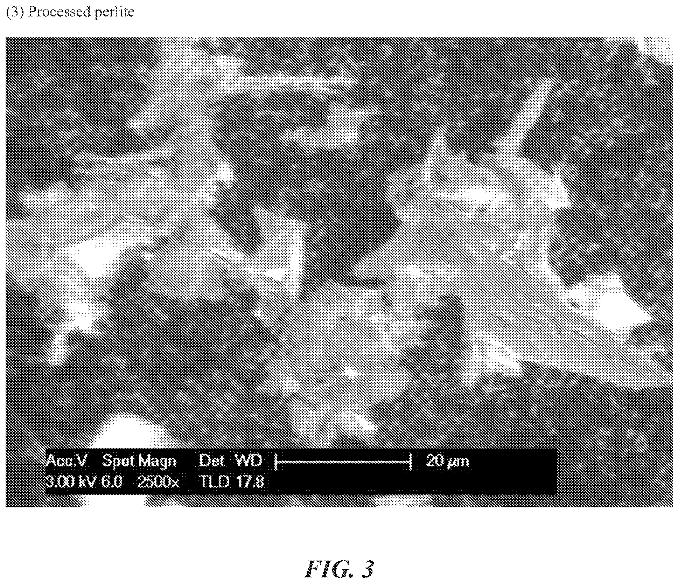

Referring to FIG. 3, shown is an enlarged image of an expanded perlite particle showing a preferred structural shape for processed perlite particles. The particles may be described as having three-dimensional wedge-like sharp blades and points with a variety of sizes. The irregular shape promotes diverse kinetic boundary layer mixing. The expanded perlite shown in FIG. 3 is extremely lightweight, having a density in the range of 0.1-0.15 g/cm. The low weight allows for minimal fluid velocity to promote rotation of the particle. The blade-like characteristics visible in FIG. 3 easily capture the kinetic energy of the fluid flowing over the boundary layer while the jagged blade-like characteristics visible in FIG. 3 easily pierce into the boundary layer of the flowing fluid to promote agitation while maintaining adherence to the surface of the boundary layer. The preferred approximate application size is estimated to be 900nm to 50 µ. This kinetic mixing particle produces dispersion in a variety of fluids have a wide range of viscosities. Additionally, the expanded perlite particle is an excellent nucleating agent in foaming processes.

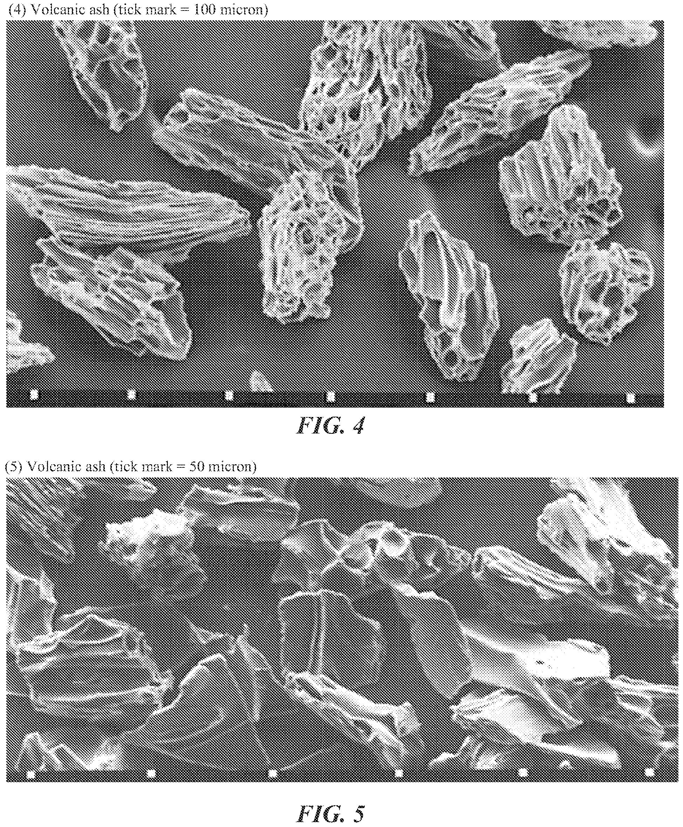

Referring now to FIG. 4, shown is volcanic ash in its natural state. Volcanic ash exhibits similar characteristics to the characteristics of expanded perlite, discussed above, regarding the thin walled cellular structures. Volcanic ash is a naturally formed material that is readily mineable and that can be easily processed into a kinetic mixing material that produces kinetic boundary layer mixing. The volcanic ash material is also deformable, which makes it an ideal candidate for in-line processes to produce desired shapes either by mixing or pressure application.

Referring now to FIG. 5, shown is a plurality of crushed volcanic ash particles. FIG. 5 illustrates a crushed particle form having three-dimensional bladelike characteristics that will interact in the boundary layer in a similar manner to expanded perlite, discussed above, in its processed formed. The crushed volcanic ash particles of FIG. 5 are larger than the processed perlite, making application of crushed volcanic ash particles more appropriate to higher viscosity materials. The preferred approximate application size is estimated to be between 80 µ to 30 µ. This material will function similar to the processed perlite materials discussed above.

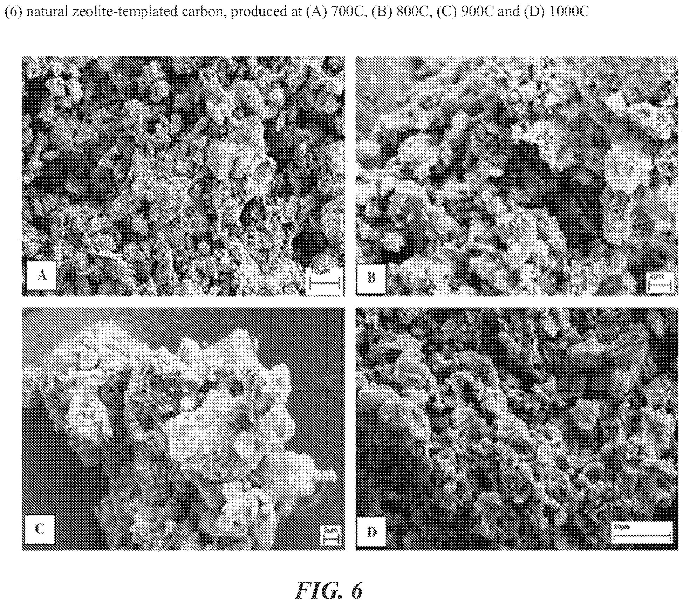

Referring now to FIGS. 6A-6D, shown is natural zeolite-templated carbon produced at 700 C (FIG. 6A), 800 C (FIG. 6B), 900 C (FIG. 6C), and 1000 C (FIG. 6D). Zeolite is a readily mineable material with small pore sizes that can be processed to produce desired surface characteristics of kinetic mixing material. Processed perlite and crushed volcanic ash have similar boundary layer interaction capabilities. Zeolite particles have small porosity and can, therefore, produce active kinetic boundary layer mixing particles in the nano range. The preferred approximate application size is estimated to be between 600 nm to 900 nm. Zeolite particles are ideal for friction reduction in medium viscosity materials.

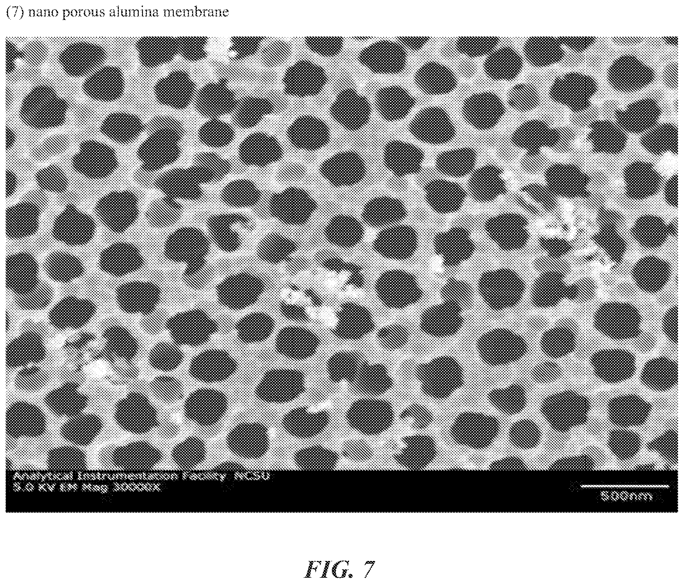

Referring now to FIG. 7, shown is a nano porous alumina membrane having a cellular structure that will fracture and create particle characteristics similar to any force material. Material fractures will take place at the thin walls, not at the intersections, thereby producing characteristics similar to the previously discussed materials, which are ideal for boundary layer kinetic mixing particles. The preferred approximate application size is estimated to be between 300 nm to 500 nm. The particle sizes of this material are more appropriately applied to medium to low viscosity fluids.

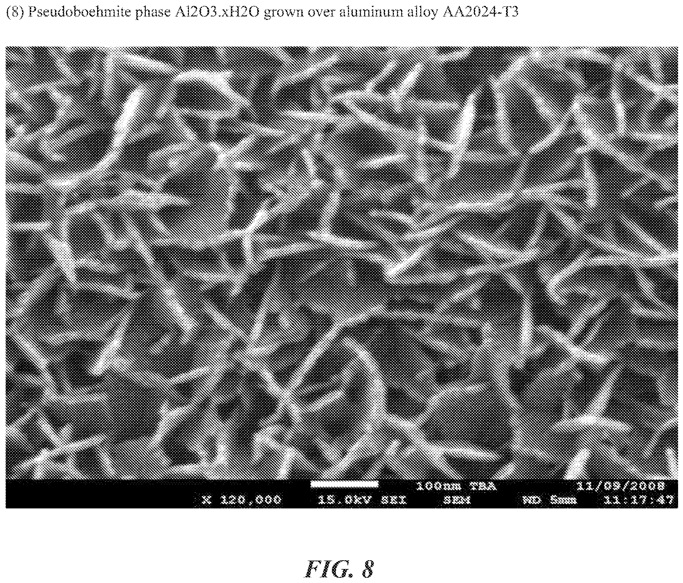

Referring now to FIG. 8, shown is a pseudoboehmite phase Al₂O₃xH₂O grown over aluminum alloy AA2024-T3. Visible are bladelike characteristics on the surface of processed Perlite. The fracture point of this material is at the thin blade faces between intersections where one or more blades join. Fractures will produce a three-dimensional blade shape similar to a "Y", "V" or "X" shape or similar combinations of geometric shapes. The preferred approximate application size is estimated to be from 50 nm to 150 nm.

### Particle Type II

Particle type II achieves medium penetration into a boundary layer for producing minimal kinetic boundary layer mixing and minimal dispersion capabilities. Type II particles result in minimal fluid flow improvement and are easily suspended due to the large surface and extremely low mass of Type II particles.

The majority of materials that form hollow spheres can undergo mechanical processing to produce egg shell-like fragments with surface characteristics to promote kinetic boundary layer mixing.

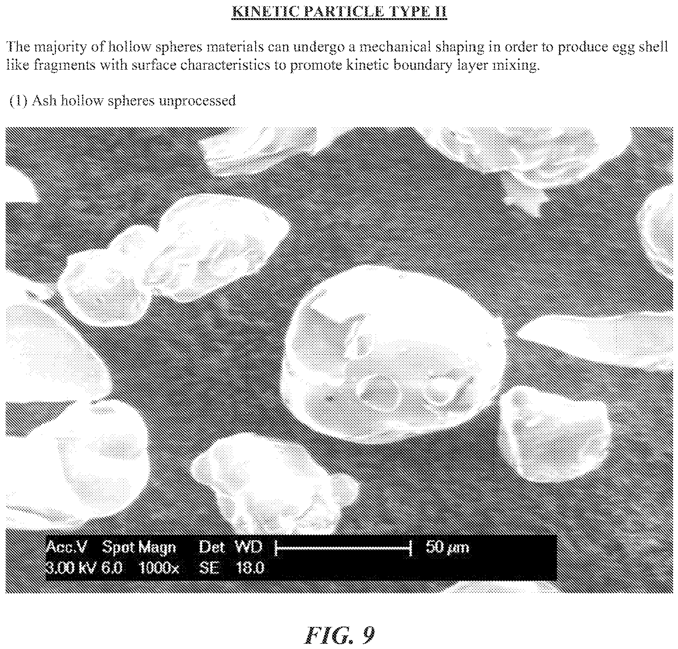

Referring now to FIG. 9, shown is an image of unprocessed hollow spheres of ash. Ash is mineable material that can undergo self-shaping to produce kinetic boundary layer mixing particle characteristics depending on process conditions. The preferred approximate application size is estimated to be 20 µ to 80 µ prior to self-shaping processes. Self-shaping can be achieved either by mechanical mixing or pressure, either of which produce a crushing effect.

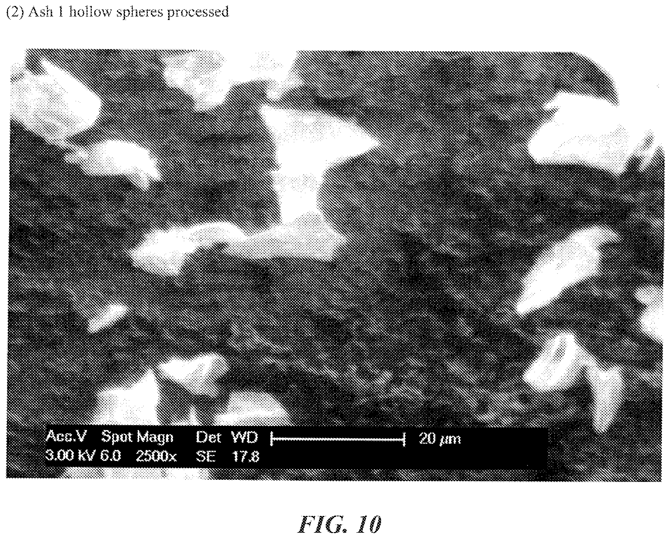

Referring now to FIG. 10, shown are processed hollow spheres of ash. The fractured ash spheres will tumble in a boundary layer similar to a piece of paper on a sidewalk. The slight curve of the material is similar to a piece of egg shell in that the material tends to tumble because of its light weight and slight curvature. Preferred approximate application size is estimated to be between 5 nm to 50 nm. Ash spheres will function in a manner similar to expanded perlite but the material possesses an inferior disbursing capability because its geometric shape does not allow particles to become physically locked into the boundary layer due to the fact that two or more blades produces more resistance and better agitation as a particle tumbles along the boundary layer. This material reduces friction between flowing fluid and the wall of pipe or process equipment during the flow of heavy viscosity materials.

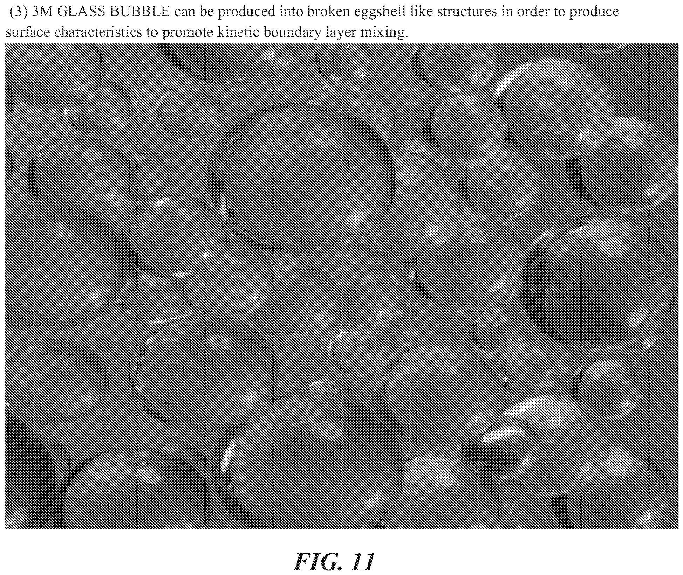

Referring now to FIG. 11, shown are 3M® glass bubbles that can be processed into broken eggshell-like structures to produce surface characteristics that promote kinetic boundary layer mixing. The broken glass bubble particles are similar in performance and application to the ash hollow spheres except that the wall thickness and diameter, as well as strength, can be tailored based on process conditions and raw material selections. These man-made materials are suitable for use in food grade applications. The preferred application size is estimated to be from approximately 80 µ to 5 µ prior to self-shaping processes. Self-shaping may be accomplished either by mechanical mixing or by pressure that produce a crushing effect.

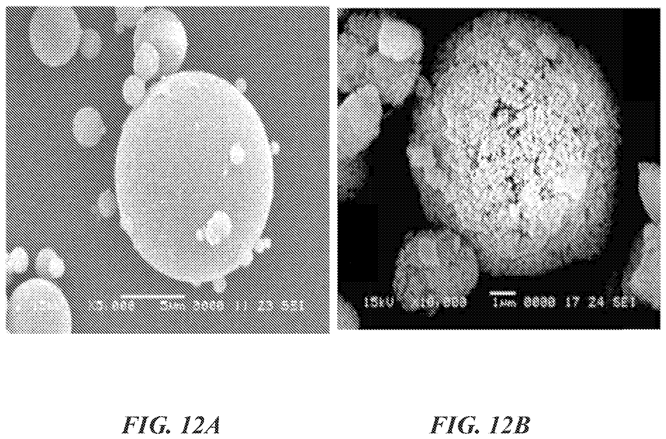

Referring now to FIG. 12, shown is an SEM photograph of fly ash particles x 5000 (FIG. 12A) and zeolite particles x 10000 (FIG. 12B). The particles comprise hollow spheres. Fly ash is a common waste product produced by combustion. Fly ash particles are readily available and inexpensive. Zeolite can be mined and made by an inexpensive synthetic process to produce hundreds of thousands of variations. Therefore, desirable characteristics of a structure derived from a hollow zeolite sphere can be selected. The zeolite particle shown is a hybrid particle, in that the particle will have surface characteristic similar to processed perlite and the particle retains a semi-curved shape, i.e., an egg shell shape similar to that of a crushed hollow sphere. The preferred approximate application size is estimated to be from 5 µ to 800 nm prior to self-shaping processes. Self-shaping may be accomplished either by mechanical mixing or by pressure to produce a crushing effect. The small size of these particles makes the particles ideal for use in medium viscosity materials.

### Particle type III

Particles categorized as Particle type III exhibit minimal penetration into a boundary layer. Type III particles exhibit minimal kinetic mixing in the boundary layer and have excellent dispersion characteristics with both soft chemical and hard mineral additives. Type III particles increase fluid flow and do not suspend well but are easily mixed back into suspension. Some solid materials have the ability to produce conchordial fracturing to produce surface characteristics that promote kinetic boundary layer mixing.

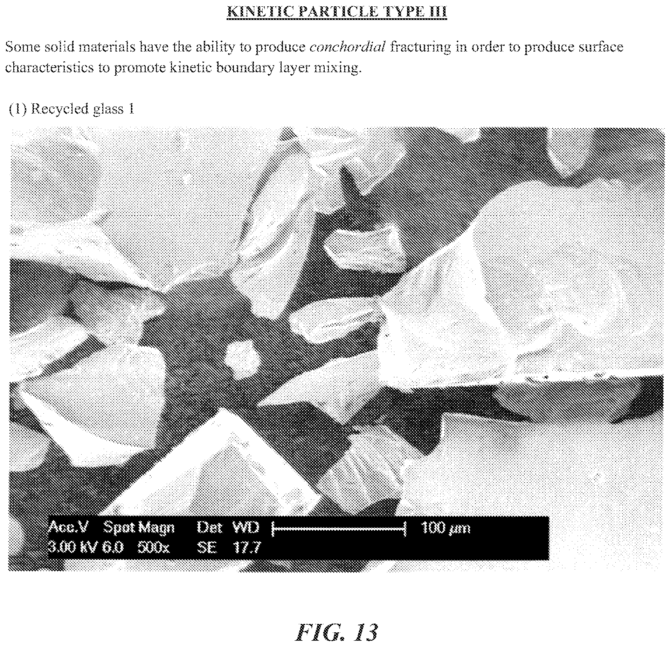

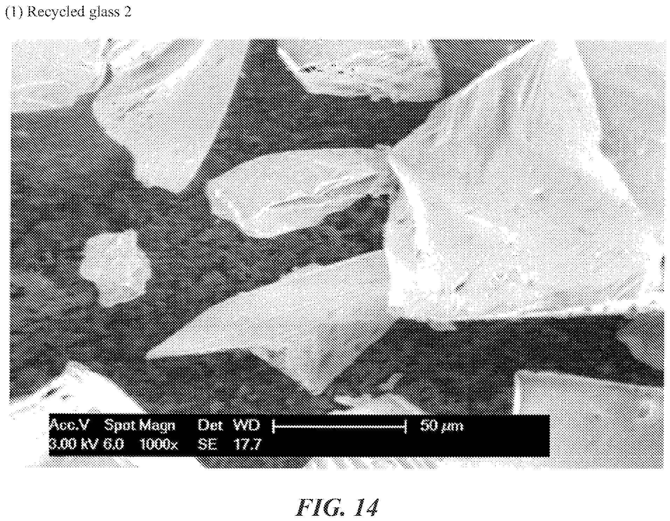

Referring now to FIGS. 13 and 14, shown are images of recycled glass. Recycled glass is a readily available man-made material that is inexpensive and easily processed into kinetic boundary layer mixing particles. The sharp bladelike characteristics of the particles are produced by conchordial fracturing similar to a variety of other mineable minerals. The bladelike surfaces of these particles are not thin like perlite. The density of the particles is proportional to the solid from which the particles are made. The sharp blades interact with a fluid boundary layer of a flowing fluid in a manner similar to the interaction of perlite except that the recycled glass particles typically require a viscous material and a robust flow rate to produce rotation. Processed recycled glass has no static charge. Therefore, recycled glass produces no agglomeration during dispersion. However, because of its high density, recycled glass particles can settle out of the fluid easier than other low-density materials. The preferred approximate application sizes are estimated to be between 5 µ to 200 µ. This material produces good performance in boundary layers of heavy viscosity fluids with high flow rates. This kinetic mixing particle produces dispersion. The smooth surface of the particles reduces friction.

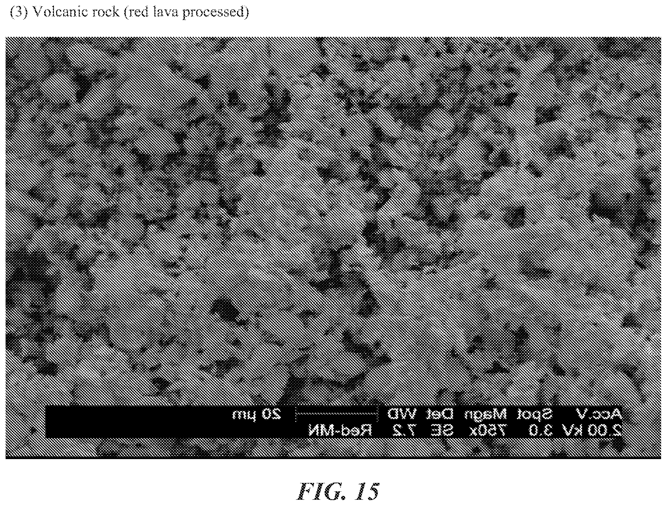

Referring now to FIG. 15, shown is an image of processed red lava volcanic rock particles. Lava is a readily available mineable material. A typical use for lava is for use as landscape rocks in the American Southwest and in California. This material undergoes conchordial fracturing and produces characteristics similar to recycled grass. However, the fractured surfaces possess more surface roughness than the smooth surface of the recycled glass. The surface characteristics produce a slightly more grinding effect coupled with bladelike cutting of a flowing fluid. Therefore, the particles not only tumble, they also have an abrasive effect on a fluid stream. The volcanic material disperses semi-hard materials throughout viscous mediums such as fire retardants, titanium dioxide, calcium carbonate, etc. The preferred approximate application sizes are estimated to be between 1 µ to 40 µ. Processed volcanic rock produces good performance in the boundary layer of flowing heavy viscosity materials at high flow rates and produces dispersion.

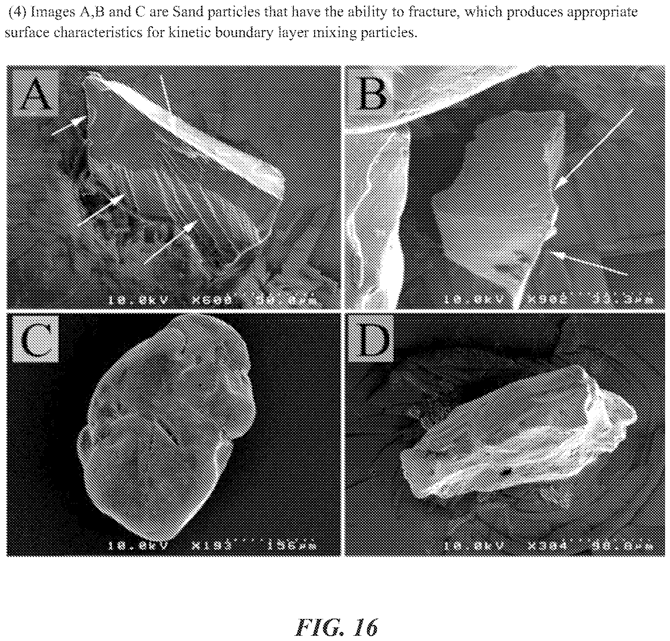

Referring now to FIGS. 16A-16D, FIGS. 16A-16C show sand particles that have the ability to fracture and to produce appropriate surface characteristics for use as kinetic boundary layer mixing particles. The images show particles having similar physical properties to properties of recycled glass, which produces similar benefits. FIGS. 16A, 16B, and 16D have good surface characteristics for interacting with the boundary layer of a flowing fluid even though the surface characteristics shown in the figures are different. FIG. 16A shows some bladelike characteristics having good surface roughness along edges of the particle to promote boundary layer surface interaction. The particles of FIG. 16A will require higher velocity flow rates to produce tumbling. The particles of FIG. 16B have similar surface characteristics to the surface characteristics of recycled glass as discussed previously. FIG. 16D shows particles having a good surface roughness to promote interaction similar to the interaction of these materials generally. The performance of these particles is similar to the performance of recycled glass. Sand is an abundant material that is mineable and can be processed inexpensively to produce desired fractured shapes in a variety of sizes. Sand is considered environmentally friendly because it is a natural material. The preferred approximate application sizes are estimated to be between 5 µ to 250 µ. This material produces good performance in the boundary layers of heavy viscosity materials at high flow rates. This kinetic mixing particle produces dispersion. The smooth surface of the particles reduces friction.

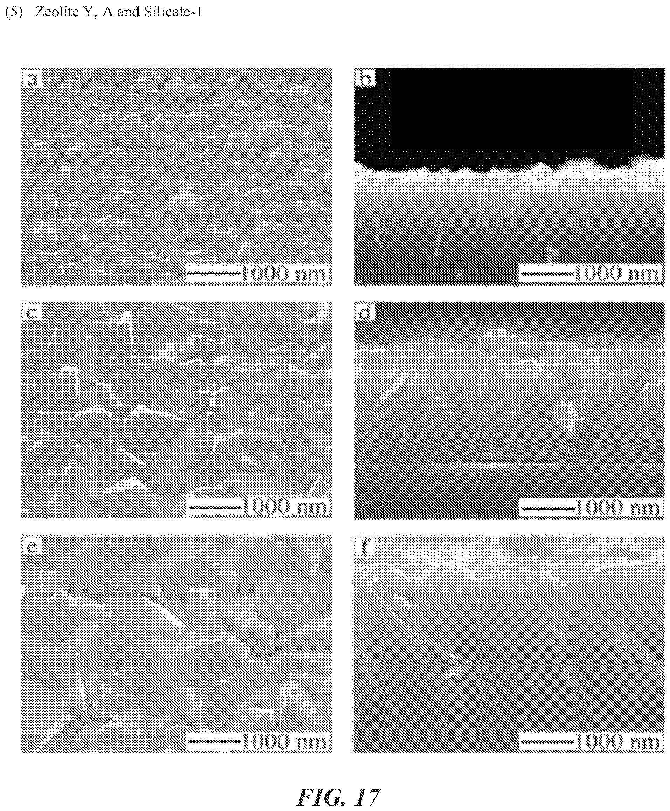

Referring now to FIGS. 17A-17F, shown are images of zeolite Y, A and silicate-1. SEM images of films are shown that have been synthesized for 1 h (FIGS. 17A, 17B), 6 h (FIGS. 17C, 17D) and 12 h (FIGS. 17E, 17F) in the bottom part of a synthesis solution at 100° C. These materials can be processed to produce nano sized kinetic boundary layer mixing particles. This material is synthetically grown and is limited in quantity and, therefore, tends to be expensive. All six images, i.e., FIGS. 17A-17F clearly show the ability of this material to produce conchordial fracturing with bladelike structures similar to the structures mentioned above. The preferred approximate application size is estimated to be between 500 nm to 1000 nm. The particle size range of this material makes it useful in medium viscosity fluids.

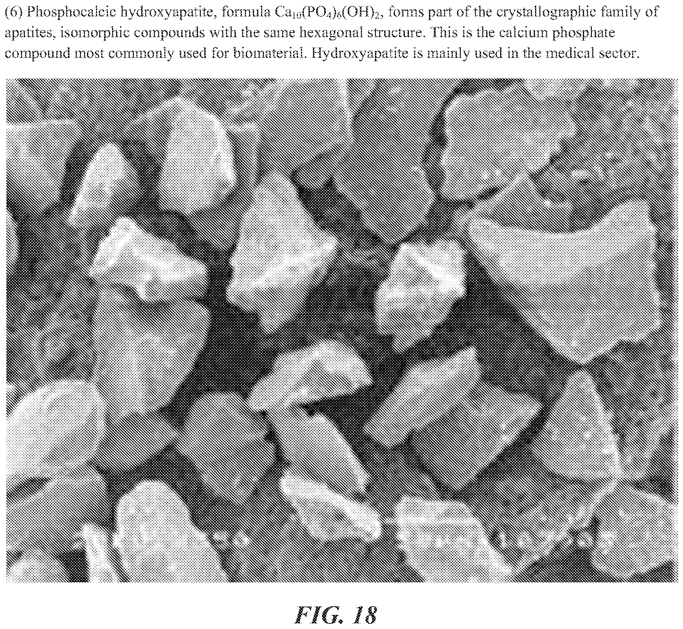

Referring now to FIG. 18, shown is phosphocalcic hydroxyapatite, formula Ca₁₀(PO₄)₆(OH)₂, which forms part of the crystallographic family of apatites, which are isomorphic compounds having the same hexagonal structure. This is the calcium phosphate compound most commonly used for biomaterial. Hydroxyapatite is mainly used for medical applications. The surface characteristics and performance are similar to those of red lava particles, discussed above, but may possess a better surface roughness than red lava particles.

### Particle Type IV

Some solid clustering material have the ability to produce fracturing of the cluster structure to produce individual unique uniform materials that produce surface characteristics that promote kinetic boundary layer mixing.

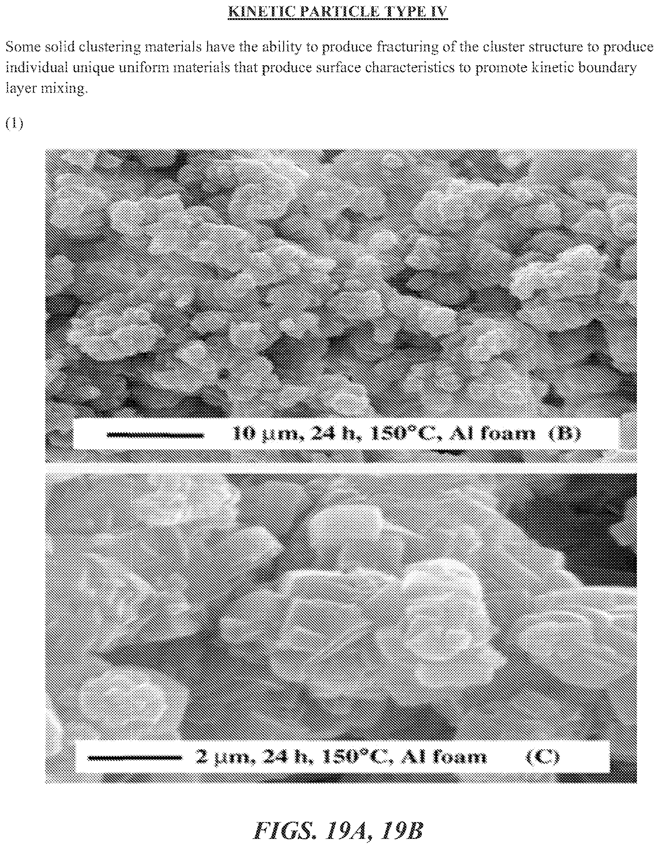

Referring now to FIGS. 19A and 19B, shown are SEM images of Al foam/zeolite composites after 24 h crystallization time at different magnifications. FIG. 19A shows an Al form/zeolite strut. FIG. 19B shows MFI agglomerates. The two images show an inherent structure of this material that will readily fracture upon mechanical processing to produce irregular shaped clusters of individual uniquely formed particles. The more diverse a material's surface characteristics, the better the material will interact with the sticky nonslip zone of a boundary layer of a flowing fluid to produce kinetic boundary layer mixing. This material possesses flowerlike buds with protruding random 90° corners that are sharp and well defined. The corners will promote mechanical agitation of the boundary layer. The particles also have a semi-spherical or cylinder-like shapes that will allow the material to roll or tumble while maintaining contact with the boundary layer due to the diverse surface characteristics. The preferred approximate application size of the particles is estimated to be between 1 µ to 20 µ. This material could be used in a high viscosity fluid. The surface characteristics will produce excellent dispersion of hardened materials such as fire retardants, zinc oxide, and calcium carbonate. As particles of Al foam/Zeolite composites are is rolled, the block-like formation acts like miniature hammer mills that chip away at materials impacting against the boundary layer in flowing fluid.

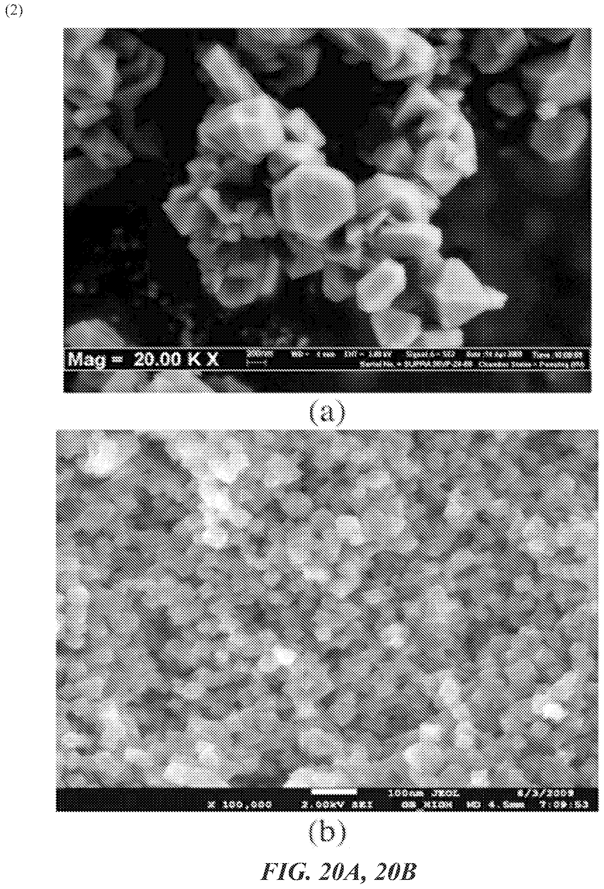

Referring now to FIGS. 20A and 20B, shown is an SEM image of microcrystalline zeolite Y (FIG. 20A) and an SEM image of nanocrystalline zeolite Y (FIG. 20B). The particles have all the same characteristics on the nano level as those mentioned in the foam/zeolite, above. In FIG. 20A, the main semi-flat particle in the center of the image is approximately 400 nm. In FIG. 20B, the multifaceted dots are less than 100 nm in particle size. Under mechanical processing, these materials can be fractured into diverse kinetic boundary layer mixing particles. The preferred approximate application size is estimated for the cluster material of FIG. 20A to be between 400 nm and 10 µ and for cluster material of FIG. 20B to be between 50 nm to 150 nm. Under high mechanical sheer, these clustering materials have the ability to self-shape by fracturing the most resistant particle that is preventing the cluster particle from rolling easily. Due to their dynamic random rotational ability, these cluster materials are excellent for use as friction modifiers in flowing fluid.

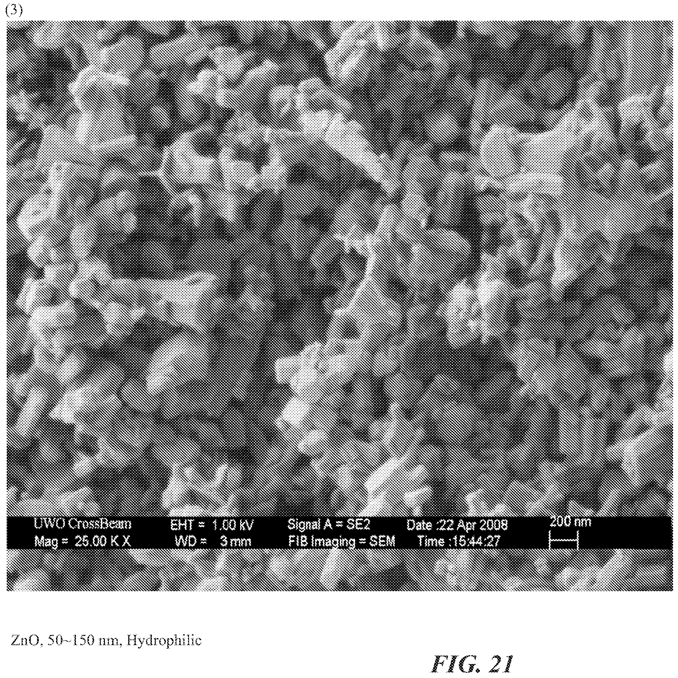

Referring now to FIG. 21, shown are zinc oxide particles of 50 nm to 150 nm. Zinc oxide is an inexpensive nano powder that can be specialized to be hydrophobic or to be more hydrophilic depending on the desired application. Zinc oxide forms clusters having extremely random shapes. This material works very well due to its resulting random rotational movement in a flowing fluid. The particles have diverse surface characteristics with 90° corners that create bladelike characteristics in diverse shapes. Surface characteristics include protruding arms that are conglomerated together in various shapes such as cylinders, rectangles, cues, Y-shaped particles, X-shaped particles, octagons, pentagon, triangles, and diamonds. Because these materials are made out of clusters having diverse shapes the materials produce enormous friction reduction because the boundary layer is churned to be as close to turbulent as possible by diverse mechanical mixing while still maintaining a laminar fluid flow.

### Particle Type V

Particles of Type V result in medium penetration into the boundary layer. Type V particles create medium kinetic mixing of the boundary layer similar to a leaf rake on dry ground. Type V particles have excellent adhesive forces to the gluey region of the boundary layer, which is required for two-phase boundary layer mixing. Particle of Type V produce minimal dispersion of additives. Therefore, addition of Type V particles increases fluid flow and the particles will tend to stay in suspension. Some hollow or solid semi-spherical clustering material with aggressive surface morphology, e.g., roughness, groups, striations and hair-like fibers, promote excellent adhesion to the boundary layer with the ability to roll freely and can be used in low viscosity fluids and phase change materials, e.g., liquid to a gas and gas to a liquid. Type V particles possess the desired surface characteristics to promote boundary layer kinetic mixing.

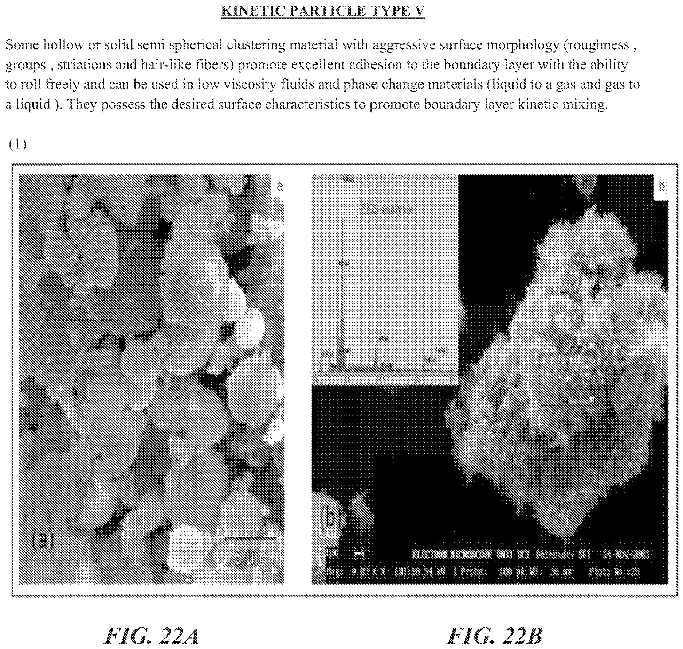

Referring now to FIGS. 22A and 22B, shown is a scanning electron micrograph of solid residues (FIG. 22A) and a scanning electron micrograph and energy dispersive spectroscopy (EDS) area analysis of zeolite-P synthesized at 100 °C. Unlike the cluster materials discussed in particle type IV, these materials have a spherical shape and a surface roughness that may be created by hair-like materials protruding from the surface of the particles. FIG. 22A shows a particle that possesses good spherical characteristics. A majority of the spheres have surface roughness that is created by small connecting particles similar to sand grains on the surface. FIG. 22B shows a semi-circular particle that has hair-like fibers protruding from the entire surface. These characteristics promote good, but not excellent, adhesion to the boundary layer. These materials roll freely on the surface of the boundary layer to produce minimal mixing to promote kinetic boundary layer mixing in a two-phase system. For example, as a liquid transitions to a gas in a closed system the boundary layer is rapidly thinning. The particles must stay in contact and roll to promote kinetic boundary layer mixing. The material also must have the ability to travel within the gas flow to recycle back into the liquid to function as an active medium in both phases. These particles have a preferred size range of between approximately 1 µ to 5 µ (FIG. 22A) and from between approximately 20 µ to 40 µ (FIG. 22B). They both would work well in a high pressure steam generation system where the particles would move the stagnant film on the walls of a boiler from conduction toward a convection heat transfer process.

### Particle Type VI

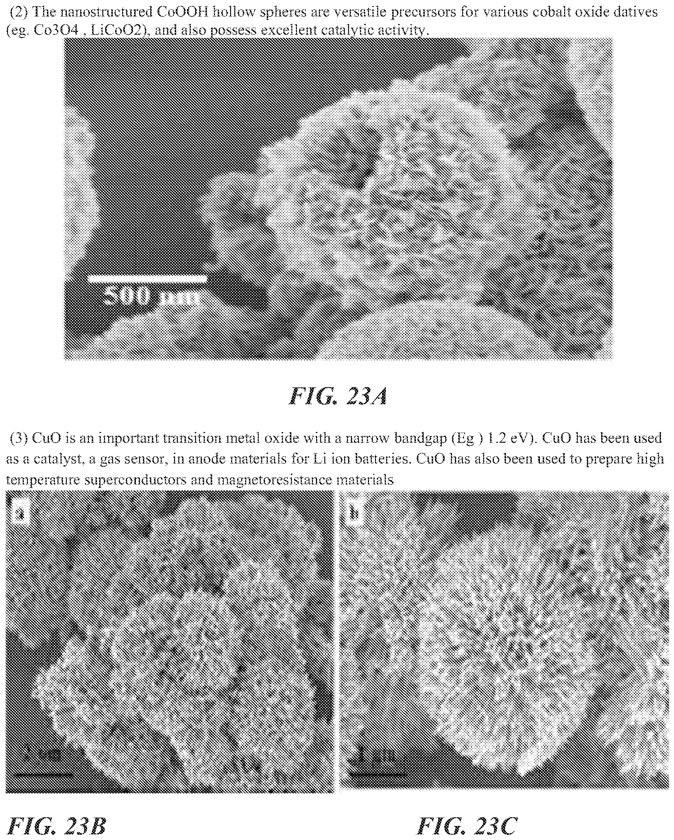

Referring now to FIGS. 23A, 23B, and 23C, shown are nanostructured CoOOH hollow spheres that are versatile precursors for various cobalt oxide datives (e.g. Co₃O₄, LiCoO₂) and also possess excellent catalytic activity. CuO is an important transition metal oxide with a narrow bandgap (e.g., 1.2 eV). CuO has been used as a catalyst, a gas sensor, and in anode materials for Li ion batteries. CuO has also been used to prepare high temperature superconductors and magnetoresistance materials.

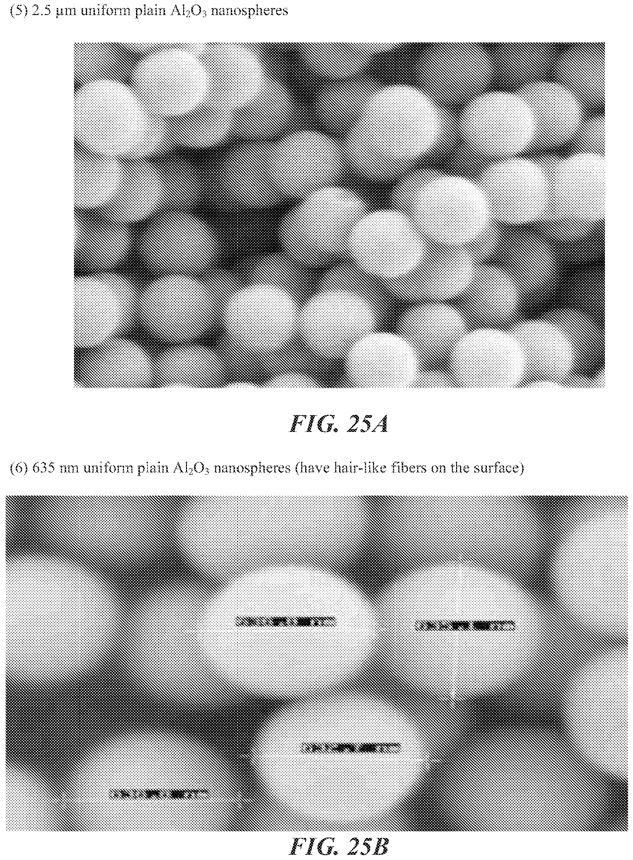

Referring now to FIGS. 25A and 25B, shown is 2.5 µm uniform plain Al₂O₃ nanospheres (FIG. 25A) and 635 nm uniform plain Al₂O₃ nanospheres having hair-like fibers on the surface.

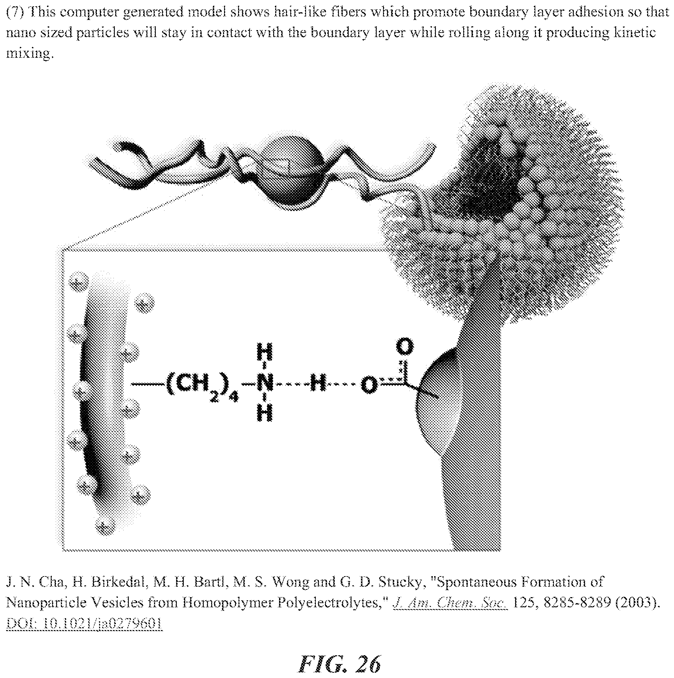

Referring now to FIG. 26, shown is a computer generated model that show hair-like fibers that promote boundary layer adhesion so that nano-sized particles will stay in contact with a boundary layer of a flowing fluid while rolling along the boundary layer and producing kinetic mixing.

## Claims

1. A method of producing a foam having cellular consistency, comprising the steps of:
adding kinetic mixing particles having irregular surface characteristics to foam constituent fluids wherein said irregular surface characteristics are selected from the group consisting of internal particle void angles less than 180° and conglomerations that incorporate these surface characteristics;
mixing said foam constituent fluids;
rotating said kinetic mixing particles to produce low energy surface regions inside said foam constituent fluids;
expanding said foam constituent fluids to form a foam having a plurality of foam voids.

2. The method according to claim 1 wherein:
said irregular surface characteristics are conglomerations having a shape selected from the group consisting of protruding arms that are conglomerated together as cylinders, rectangles, cubes, Y-shaped particles, X-shaped particles, octagons, pentagon, triangles or diamonds.

3. The method according to claim 1 wherein:
when said kinetic mixing particles are no longer rotating, said kinetic mixing particles form nucleation points adjacent to said irregular surface characteristics.

4. The method according to claim 1 further comprising a step of:
selecting an average size of said kinetic mixing particles to select an average size of said void in said foam.

5. The method according to claim 4 wherein:
said size of said foam void in said foam has a diameter that is 0.025 to 8 times the average diameter of said kinetic mixing particles.

6. A foam having cellular consistency comprising:
expanded mixed foam constituents comprising a plurality of voids therein; and
kinetic mixing particles in said expanded foam, said kinetic mixing particles having irregular surface characteristics wherein said irregular surface characteristics are selected from the group consisting of internal particle void angles less than 180° and conglomerations that incorporate one or more of these surface characteristics.

7. The foam according to claim 6 wherein:
said foam voids of said foam have an average diameter of 0.025 to 8.0 times an average size of said kinetic mixing particles.

8. The foam according to claim 6 wherein:
said irregular surface characteristics are conglomerations having a shape selected from the group consisting of protruding arms that are conglomerated together as cylinders, rectangles, cubes, Y-shaped particles, X-shaped particles, octagons, pentagon, triangles or diamonds.

9. The method or foam according to claim 1 or 6 wherein:
said kinetic mixing particles are comprised of perlite.

10. The method or foam according to claim 12 wherein said perlite is solid.

11. The method or foam according to claim 12 wherein said perlite is expanded.

12. The method or foam according to claim 1 or 6 wherein:
said kinetic mixing particles have a hardness of at least 2.5 on the Mohs hardness scale.

13. The method or foam according to claim 1 or 6 wherein:
said kinetic mixing particles are selected from a group consisting of solid or porous materials, manmade or naturally occurring minerals and or rocks.

## Patentansprüche

1. Verfahren zum Erzeugen eines Schaums mit zellulärer Konsistenz, umfassend die Schritte:
Hinzufügen von kinetischen Mischpartikeln mit unregelmäßigen Oberflächeneigenschaften zu schaumkonstituierenden Fluiden, wobei die unregelmäßigen Oberflächeneigenschaften ausgewählt sind aus der Gruppe bestehend aus inneren Partikelporenwinkeln, die geringer als 180° sind, und Konglomeraten, die diese Oberflächeneigenschaften beinhalten:
Mischen der schaumkonstituierenden Fluide;
Rotieren der kinetischen Mischpartikel, um Oberflächenregionen mit niedriger Energie innerhalb der schaumkonstituierenen Fluide zu bilden;
Expandieren der schaumkonstituierenden Fluide, um einen Schaum mit einer Vielzahl von Schaumhohlräumen zu bilden.

2. Verfahren nach Anspruch 1, wobei:
die irregulären Oberflächeneigenschaften Konglomerate mit einer Form sind, welche ausgewählt ist aus der Gruppe bestehend aus vorstehenden Armen, die als Zylinder Rechtecke, Würfel, Y-förmige Partikel, X-förmige Partikel, Achtecke, Fünfeck, Dreiecke oder Rauten zusammenkongolomeriert sind.

3. Verfahren nach Anspruch 1, wobei:
wenn die kinetischen Mischpartikel nicht länger rotieren, die kinetischen Mischpartikel keimbildende Stellen neben den unregelmäßigen Oberflächeneigenschaften bilden.

4. Verfahren nach Anspruch 1, ferner umfassend den Schritt:
Auswählen einer durchschnittlichen Größe der kinetischen Mischpartikel, um eine durchschnittliche Größe des Hohlraums in dem Schaum auszuwählen.

5. Verfahren nach Anspruch 4, wobei:
die Größe des Schaumhohlraums in dem Schaum einen Durchmesser hat, der das 0,025 bis 8 fache des durchschnittlichen Durchmessers der kinetischen Mischpartikel beträgt.

6. Schaum mit zellulärer Konsistenz, umfassend:
expandierte gemischte Schaumkonstituenten umfassend darin eine Vielzahl von Hohlräumen; und
kinetische Mischpartikel in dem expandierten Schaum, wobei die kinetischen Mischpartikel unregelmäßige Oberflächeneigenschaften haben, wobei die unregelmäßigen Oberflächeneigenschaften ausgewählt sind aus der Gruppe bestehend aus inneren Partikelporenwinkeln, die geringer als 180° sind, und Konglomeraten, die eine oder mehrere dieser Oberflächeneigenschaften beinhalten.

7. Schaum nach Anspruch 6, wobei:
die Schaumhohlräume des Schaums einen durchschnittlichen Durchmesser haben, der das 0,025 bis 8fache eines durchschnittlichen Durchmessers der kinetischen Mischpartikel beträgt.

8. Schaum nach Anspruch 6, wobei:
die unregelmäßigen Oberflächeneigenschaften Konglomerate mit einer Form sind, welche ausgewählt ist aus der Gruppe bestehend aus vorstehenden Armen, die als Zylinder Rechtecke, Würfel, Y-förmige Partikel, X-förmige Partikel, Achtecke, Fünfeck, Dreiecke oder Rauten zusammenkongolomeriert sind.

9. Verfahren oder Schaum nach Anspruch 1 oder 6, wobei:
die kinetischen Mischpartikel Perlit umfassen.

10. Verfahren oder Schaum nach Anspruch 12, wobei das Perlit fest ist.

11. Verfahren oder Schaum nach Anspruch 12, wobei das Perlit expandiert ist.

12. Verfahren oder Schaum nach Anspruch 1 oder 6, wobei:
die kinetischen Mischpartikel eine Härte von wenigstens 2,5 auf der Mohs-Härteskala haben.

13. Verfahren oder Schaum nach Anspruch 1 oder 6, wobei:
die kinetischen Mischpartikel ausgewählt sind aus der Gruppe bestehend aus festen oder porösen Materialien, künstlichen oder natürlich vorkommenden Mineralien und/oder Gesteinen.

## Revendications

1. Procédé de fabrication d'une mousse ayant une consistance cellulaire, comprenant les étapes :
d'ajout des particules de mélange cinétique ayant des caractéristiques de surface irrégulières à des fluides constituants de mousse, lesdites caractéristiques de surface irrégulières étant choisies dans le groupe constitué par des angles de vide de particule internes inférieurs à 180° et des agglomérats qui incorporent ces caractéristiques de surface ;
de mélange desdits fluides constituants de mousse ;
d'entraînement en rotation desdites particules de mélange cinétique pour fabriquer des régions de surface à faible énergie à l'intérieur desdits fluides constituants de mousse ;
d'expansion desdits fluides constituants de mousse pour former une mousse ayant des vides de mousse.

2. Procédé selon la revendication 1, dans lequel :
une pluralité desdites caractéristiques de surface irrégulières sont des agglomérats ayant une forme choisie dans le groupe constitué de branches en saillie qui sont agglomérées ensemble sous forme de cylindres, rectangles, cubes, particules en forme de Y, particules en forme de X, octogones, pentagones, triangles ou diamants.

3. Procédé selon la revendication 1, dans lequel :
lorsque lesdites particules de mélange cinétique ne sont plus entraînées en rotation, lesdites particules de mélange cinétique forment des points de nucléation proches desdites caractéristiques de surface irrégulières.

4. Procédé selon la revendication 1, comprenant en outre une étape de :
sélection d'une taille moyenne desdites particules de mélange cinétique afin de sélectionner une taille moyenne dudit vide dans ladite mousse.

5. Procédé selon la revendication 4, dans lequel :
ladite taille dudit vide de mousse dans ladite mousse a un diamètre qui est 0,025 à 8 fois le diamètre moyen desdites particules de mélange cinétique.

6. Mousse ayant une consistance cellulaire comprenant :
des constituants de mousse mélangés expansés comprenant une pluralité de vides dans celle-ci ; et
des particules de mélange cinétiques dans ladite mousse expansée, lesdites particules de mélange cinétique ayant des caractéristiques de surface irrégulières, lesdites caractéristiques de surface irrégulières étant choisies dans le groupe constitué par les angles de vide des particules internes inférieurs à 180° et les agglomérations qui incorporent une ou plusieurs de ces caractéristiques de surface.

7. Mousse selon la revendication 6, dans laquelle :
lesdits vides de mousse de ladite mousse ont un diamètre moyen de 0,025 à 8,0 fois une taille moyenne desdites particules de mélange cinétique.

8. Mousse selon la revendication 6, dans laquelle :
lesdites caractéristiques de surface irrégulières sont des conglomérats ayant une forme choisie dans le groupe constitué par les bras saillants qui sont agglomérés ensemble en cylindres, rectangles, cubes, particules en forme de Y, particules en forme de X, octogones, pentagone, triangles ou diamants.

9. Procédé ou mousse selon la revendication 1 ou 6, dans lequel :
lesdites particules de mélange cinétique sont constituées de perlite.

10. Procédé ou mousse selon la revendication 12, dans lequel ladite perlite est solide.

11. Procédé ou mousse selon la revendication 12, dans lequel ladite perlite est expansée.

12. Procédé ou mousse selon la revendication 1 ou 6, dans lequel :
lesdites particules de mélange cinétique ont une dureté d'au moins 2,5 sur l'échelle de dureté de Mohs.

13. Procédé ou mousse selon la revendication 1 ou 6, dans lequel :
lesdites particules de mélange cinétique sont choisies dans un groupe constitué de matériaux solides ou poreux, de minéraux synthétiques ou naturels et/ou de roches.
